# EUROPEAN PATENT APPLICATION

(11) **EP 4 819 571 A1**
(43) Date of publication of application: **07.10.2026**
(21) Application number: 24911187.3
(22) Date of filing: 25.12.2024
(51) Int. Cl.: H04L 47/10

(54) **TRAFFIC MANAGEMENT METHOD, SERVICE MESH SYSTEM, APPARATUS, AND CLUSTER**

(30) Priority: 25.12.2023 CN 202311817785; 06.03.2024 CN 202410256865
(71) Applicant: Huawei Cloud Computing Technologies Co., Ltd., Gui'an New District, Guizhou 550025 (CN)
(72) Inventor: ZHANG, Wei, Guiyang, Guizhou 550025 (CN); HUANG, Jian, Guiyang, Guizhou 550025 (CN); ZHANG, Yongming, Guiyang, Guizhou 550025 (CN)
(74) Representative: Pfenning, Meinig & Partner mbB
(86) International application number: PCT/CN2024/142165
(87) International publication number: WO 2025/140263

(57) **Abstract**

This application provides a traffic management method, a service mesh system, an apparatus, and a cluster. The method includes: A first L4 proxy receives a first data packet sent by a first service container group; the first L4 proxy sends an identifier of a first tenant and the first data packet to a first L7 proxy; the first L7 proxy identifies configuration information of a first service from configuration information of a plurality of services based on the identifier of the first tenant, where the first service belongs to the first tenant; and the first L7 proxy performs traffic management on the first data packet based on the configuration information of the first service. The method can improve utilization of computing resources in the service mesh system.

## Description

This application claims priorities to Chinese Patent Application No. 202311817785.7, filed with the China National Intellectual Property Administration on December 25, 2023 and entitled "SERVICE MESH SYSTEM", and to Chinese Patent Application No. 202410256865.8, filed with the China National Intellectual Property Administration on March 6, 2024 and entitled "TRAFFIC MANAGEMENT METHOD, SERVICE MESH SYSTEM, APPARATUS, AND CLUSTER", both of which are incorporated herein by reference in their entireties.

### TECHNICAL FIELD

This application relates to the field of data processing technologies, and in particular, to a traffic management method, a service mesh system, an apparatus, and a cluster.

### BACKGROUND

Currently, typical service mesh (service mesh) technology uses sidecars (sidecars) to implement traffic management between services, such as traffic routing, load balancing, and traffic control. A sidecar is injected into a container group, and installing or upgrading the sidecar requires restarting the container group, resulting in an increase in the workload on the node on which the container group is located.

The industry has propsed a service mesh technology in ambient (ambient) mode. The ambient mode, also referred to as sidecarless (sidecarless) mode, separates the functions of a sidecar into a transport-layer proxy and an application-layer proxy, where the transport-layer proxy and the application-layer proxy are decoupled from the container group, thereby avoiding the drawback of the sidecar increasing the workload of the node on which the container group is located.

In existing ambient mode, each tenant exclusively occupies an application-layer proxy, and one application-layer proxy is configured to perform traffic management for services of a single tenant. Since each application-layer proxy occupies independent computing resources, a large quantity of computing resources inevitably remains idle during a tenant's service idle period, resulting in low utilization of the computing resources.

### SUMMARY

Embodiments of this application provide a traffic management method, a service mesh system, an apparatus, and a cluster, to improve utilization of computing resources in the service mesh system.

According to a first aspect, a traffic management method is provided. The method is applied to a service mesh system, the service mesh system includes a first service node and a proxy cluster, the first service node hosts a first transport-layer L4 proxy and a first service container group of a first tenant, the proxy cluster hosts a first application-layer L7 proxy, the first L7 proxy includes configuration information of a plurality of services, different services in the plurality of services belong to a same tenant or different tenants, and the configuration information of the services is used by the first L7 proxy to perform traffic management on data packets of the services. The method includes: The first L4 proxy receives a first data packet sent by the first service container group; the first L4 proxy sends an identifier of the first tenant and the first data packet to the first L7 proxy; the first L7 proxy identifies configuration information of a first service from the configuration information of the plurality of services based on the identifier of the first tenant, where the first service belongs to the first tenant; and the first L7 proxy performs traffic management on the first data packet based on the configuration information of the first service.

According to the method provided in the first aspect, a same L7 proxy may include configuration information of services of a plurality of tenants, and when traffic management needs to be performed on a data packet of a service of a tenant, the L7 proxy obtains an identifier of the tenant, and obtains configuration information of the service of the tenant from the configuration information of the services of the plurality of tenants based on the identifier of the tenant, so that traffic management can be performed on the data packet of the service of the tenant based on the configuration information of the service of the tenant. In this way, the same L7 proxy can perform traffic management on data packets of the services of the plurality of tenants, so that the plurality of tenants share the L7 proxy. Sharing the L7 proxy among the plurality of tenants can improve utilization of computing resources of the L7 proxy, reduce scheduling pressure of the L7 proxy, and the like. Reasons are as follows:

First, idle phases of services of different tenants are usually not completely the same, that is, idle phases of different tenants are usually different. When services of some tenants are in an idle phase, services of other tenants may be in a busy phase. In this way, the L7 proxy can be prevented from being in an idle state, and utilization of the computing resources of the L7 proxy is improved.

Second, the plurality of tenants share the L7 proxy, and not every tenant needs to create an L7 proxy, thereby reducing a quantity of L7 proxies in the service mesh system. This not only can reduce computing resources required for deploying the L7 proxy in the service mesh system, but also can reduce scheduling pressure of the L7 proxy.

In addition, the L7 proxy is shared by the plurality of tenants, indicating that the L7 proxy does not need to be created based on a tenant granularity. An administrator of the service mesh system may pre-create one or more L7 proxies in the proxy cluster, and each time a new service is created, a console of the service mesh system may send configuration information of the service to the L7 proxy, so that the L7 proxy can perform traffic management on a data packet of the service based on the configuration information of the service. This improves timeliness of traffic management for the new service.

In addition, the L7 proxy is shared by the plurality of tenants and is not dedicated to a tenant. Therefore, the administrator may centrally create L7 proxies to control redundancy of configuration information of services. Specifically, each time a new service is created, the console of the service mesh system may send configuration information of the service to N L7 proxies, where N is an integer greater than or equal to 1, and a value of N may be set by the administrator. In this way, highly redundant storage of the configuration information of the services in the L7 proxies can be avoided, and memory resources of the L7 proxies can be saved.

In a possible implementation, the first service node further hosts a second service container group of a second tenant; and the method includes: The first L4 proxy receives a second data packet sent by the second service container group; the first L4 proxy sends an identifier of the second tenant and the second data packet to the first L7 proxy; the first L7 proxy identifies configuration information of a second service from the configuration information of the plurality of services based on the identifier of the second tenant, where the second service belongs to the second tenant; and the first L7 proxy performs traffic management on the second data packet based on the configuration information of the second service.

In this implementation, the first L7 proxy may perform traffic management on the data packet of the service of the first tenant and the data packet of the service of the second tenant. In other words, the first tenant and the second tenant may share the first L7 proxy, thereby improving utilization of computing resources of the first L7 proxy, reducing scheduling pressure of the L7 proxy, and the like.

In a possible implementation, the first service includes a service corresponding to the first data packet and another service; and that the first L7 proxy performs traffic management on the first data packet based on the configuration information of the first service includes: The first L7 proxy identifies, based on an identifier of the service corresponding to the first data packet, configuration information of the service corresponding to the first data packet from the configuration information of the first service; and the first L7 proxy performs traffic management on the first data packet based on the configuration information of the service corresponding to the first data packet.

The first L7 proxy may perform traffic management on data packets of a plurality of services of the first tenant. When the first L7 proxy needs to perform traffic management on a data packet of a service, the first L7 proxy may identify configuration information of the service from configuration information of the plurality of services of the first tenant based on an identifier of the service, and further may perform traffic management on the data packet of the service based on the configuration information of the service.

In a possible implementation, the proxy cluster hosts a plurality of L7 proxies; and that the first L4 proxy sends the identifier of the first tenant and the first data packet to the first L7 proxy includes: The first L4 proxy identifies, based on the identifier of the first tenant, L7 proxies including configuration information of services of the first tenant from the plurality of L7 proxies; and the first L4 proxy identifies, based on the identifier of the service corresponding to the first data packet, an L7 proxy including the configuration information of the service corresponding to the first data packet from the L7 proxies including the configuration information of the services of the first tenant, to obtain the first L7 proxy.

When the proxy cluster hosts the plurality of L7 proxies, the L4 proxy may identify, based on the identifier of the tenant, an L7 proxy including the configuration information of the service of the first tenant from the plurality of L7 proxies. Therefore, the data packet of the service of the first tenant may be sent to the L7 proxy including the configuration information of the service of the first tenant, and traffic management may be performed on the data packet of the service of the first tenant by using the L7 proxy.

In a possible implementation, the proxy cluster further hosts a second L7 proxy, and the second L7 proxy includes configuration information of at least one service; and that the first L4 proxy sends the identifier of the first tenant and the first data packet to the first L7 proxy includes: When a quantity of services belonging to the first tenant in the plurality of services is greater than a quantity of services belonging to the first tenant in the at least one service, the first L4 proxy sends the identifier of the first tenant and the first data packet to the first L7 proxy.

For ease of description, an L7 proxy including configuration information of a service may be referred to as an L7 proxy supporting the service. An L7 proxy that supports more services of the first tenant is preferentially selected to perform traffic management on the data packet of the service of the first tenant, so that data transmission between service container groups of the first tenant can be reduced. A reason is as follows:

Two or more services of a same tenant may be sequentially performed, that is, an output of one service is an input of a next service. When an L7 proxy performs traffic management on data packets of the two or more services of the same tenant, the two or more services share a routing cache. The routing cache stores an address of a target service instance (that is, one or some specific service container groups) of the two or more services. When the two or more services may be provided by a same service container group, the L7 proxy may send the data packets of the two or more services to the same target service instance by sharing the address in the routing cache, to schedule the data packets of the two or more services to the same service container group. In this way, the data packets of the two or more services may be processed in the same service container group, and data transmission between service container groups is reduced.

The L7 proxy supporting more services of the first tenant is more likely to support two or more services of the first tenant that are sequentially performed, and services requiring traffic management may be two or more services. Therefore, the L7 proxy supporting more services of the first tenant is preferentially selected to perform traffic management on data packets of the services of the first tenant, thereby increasing a probability that data packets of the two or more services of the first tenant are processed by the same service container group, and reducing data transmission between service container groups.

In a possible implementation, the proxy cluster further hosts a second L7 proxy, and the second L7 proxy also includes the configuration information of the first service; and that the first L4 proxy sends the identifier of the first tenant and the first data packet to the first L7 proxy includes: When a load of the second L7 proxy is higher than that of the first L7 proxy, the first L4 proxy sends the identifier of the first tenant and the first data packet to the first L7 proxy.

In this implementation, an L7 proxy with low load is preferentially selected to perform traffic management on a service that currently requires traffic management, thereby ensuring load balancing among the plurality of L7 proxies, and improving overall resource utilization of the plurality of L7 proxies.

In a possible implementation, the service mesh system further includes a console connected to the proxy cluster; and the method further includes: The console sends configuration information of two or more services to a same L7 proxy in the proxy cluster, where the two or more services belong to a same tenant, or an output of one of the two or more services is an input of another service.

The configuration information of the two or more services that need to be sequentially performed is sent to the same L7 proxy. Therefore, the same L7 proxy can be used to support traffic management on data packets of the two or more services, the data packets of the two or more services can be scheduled to a same service container group, and the same service container group processes the data packets of the two or more services, so that data transmission between service container groups can be reduced.

In a possible implementation, the proxy cluster hosts the plurality of L7 proxies, where in the plurality of L7 proxies, the same L7 proxy includes configuration information of the fewest services, or the same L7 proxy includes configuration information of the fewest tenants.

In this implementation, when an L7 proxy is selected to support a newly created service, an L7 proxy that supports fewer services is preferentially selected. In this way, load balancing among the plurality of L7 proxies can be ensured. Alternatively, when an L7 proxy is selected to support a newly created service, an L7 proxy that supports fewer tenants is preferentially selected. In this way, the same L7 proxy can be prevented from simultaneously becoming an affinity L7 proxy of a plurality of tenants, and overload of the L7 proxy can be avoided.

In a possible implementation, the service mesh system further includes a second service node, and the second service node hosts a second L4 proxy and a third service container group; that the first L7 proxy performs traffic management on the first data packet based on the configuration information of the first service includes: The first L7 proxy selects the third service container group as a target container group of the first data packet; and the first L7 proxy sends the first data packet and the identifier of the first tenant to the second L4 proxy; and the method further includes: The second L4 proxy determines, based on the identifier of the first tenant, that the first tenant and a tenant to which the third service container group belongs are a same tenant; and the second L4 proxy sends the first data packet to the third service container group.

In this implementation, an L4 proxy in an outbound direction of the service mesh sends the data packet to a target service container group only when it is determined that the tenant to which the data packet belongs and a tenant to which the target service container group of the data packet belongs are the same tenant. In this way, isolation between tenants is ensured.

According to a second aspect, a service mesh system is provided. The service mesh system includes a first service node and a proxy cluster, the first service node hosts a first L4 proxy and a first service container group of a first tenant, the proxy cluster hosts a first L7 proxy, the first L7 proxy includes configuration information of a plurality of services, different services in the plurality of services belong to a same tenant or different tenants, and the configuration information of the services is used by the first L7 proxy to perform traffic management on data packets of the services. The first L4 proxy is configured to receive a first data packet sent by the first service container group; the first L4 proxy is configured to send an identifier of the first tenant and the first data packet to the first L7 proxy; the first L7 proxy is configured to identify configuration information of a first service from the configuration information of the plurality of services based on the identifier of the first tenant, where the first service belongs to the first tenant; and the first L7 proxy is configured to perform traffic management on the first data packet based on the configuration information of the first service.

In a possible implementation, the first service node further hosts a second service container group of a second tenant; the first L4 proxy is further configured to receive a second data packet sent by the second service container group; the first L4 proxy is further configured to send an identifier of the second tenant and the second data packet to the first L7 proxy; the first L7 proxy is further configured to identify configuration information of a second service from the configuration information of the plurality of services based on the identifier of the second tenant, where the second service belongs to the second tenant; and the first L7 proxy is further configured to perform traffic management on the second data packet based on the configuration information of the second service.

In a possible implementation, the first service includes a service corresponding to the first data packet and another service; and the first L7 proxy is configured to: identify, based on an identifier of the service corresponding to the first data packet, configuration information of the service corresponding to the first data packet from the configuration information of the first service; and perform traffic management on the first data packet based on the configuration information of the service corresponding to the first data packet.

In a possible implementation, the proxy cluster further hosts a second L7 proxy, and the second L7 proxy includes configuration information of at least one service; and the first L4 proxy is configured to send the identifier of the first tenant and the first data packet to the first L7 proxy when a quantity of services belonging to the first tenant in the plurality of services is greater than a quantity of services belonging to the first tenant in the at least one service.

In a possible implementation, the proxy cluster further hosts a second L7 proxy, and the second L7 proxy also includes the configuration information of the first service; and the first L4 proxy is configured to send the identifier of the first tenant and the first data packet to the first L7 proxy when a load of the second L7 proxy is higher than that of the first L7 proxy.

In a possible implementation, the service mesh system further includes a console connected to the proxy cluster; and the console is configured to send configuration information of two or more services to a same L7 proxy in the proxy cluster, where the two or more services belong to a same tenant, or an output of one of the two or more services is an input of another service.

In a possible implementation, the service mesh system further includes a second service node, and the second service node hosts a second L4 proxy and a third service container group; the first L7 proxy is configured to: select the third service container group as a target container group of the first data packet; and send the first data packet and the identifier of the first tenant to the second L4 proxy; and the second L4 proxy is configured to: determine, based on the identifier of the first tenant, that the first tenant and a tenant to which the third service container group belongs are a same tenant; and send the first data packet to the third service container group.

According to a third aspect, a traffic management method is provided. The method is applied to a first L7 proxy in a service mesh system, the service mesh system includes a first service node and a proxy cluster, the first service node hosts a first L4 proxy and a first service container group of a first tenant, the proxy cluster hosts the first L7 proxy, the first L7 proxy includes configuration information of a plurality of services, different services in the plurality of services belong to a same tenant or different tenants, and the configuration information of the services is used by the first L7 proxy to perform traffic management on data packets of the services. The method includes: The first L7 proxy receives an identifier of the first tenant and a first data packet that are sent by the first L4 proxy, where the first data packet is received by the first L4 proxy from the first service container group; and the first L7 proxy identifies configuration information of a first service from the configuration information of the plurality of services based on the identifier of the first tenant, where the first service belongs to the first tenant; and the first L7 proxy performs traffic management on the first data packet based on the configuration information of the first service.

In a possible implementation, the first service node further hosts a second service container group of a second tenant; and the method includes: The first L7 proxy receives an identifier of the second tenant and a second data packet that are sent by the first L4 proxy, where the second data packet is received by the first L4 proxy from the second service container group; the first L4 proxy sends the identifier of the second tenant and the second data packet to the first L7 proxy; the first L7 proxy identifies configuration information of a second service from the configuration information of the plurality of services based on the identifier of the second tenant, where the second service belongs to the second tenant; and the first L7 proxy performs traffic management on the second data packet based on the configuration information of the second service.

In a possible implementation, the first service includes a service corresponding to the first data packet and another service; and that the first L7 proxy performs traffic management on the first data packet based on the configuration information of the first service includes: The first L7 proxy identifies, based on an identifier of the service corresponding to the first data packet, configuration information of the service corresponding to the first data packet from the configuration information of the first service; and the first L7 proxy performs traffic management on the first data packet based on the configuration information of the service corresponding to the first data packet.

In a possible implementation, the proxy cluster further hosts a second L7 proxy, and the second L7 proxy includes configuration information of at least one service; and that the first L7 proxy receives the identifier of the first tenant and the first data packet that are sent by the first L4 proxy includes: When a quantity of services belonging to the first tenant in the plurality of services is greater than a quantity of services belonging to the first tenant in the at least one service, the first L7 proxy receives the identifier of the first tenant and the first data packet that are sent by the first L4 proxy.

In a possible implementation, the proxy cluster further hosts a second L7 proxy, and the second L7 proxy also includes the configuration information of the first service; and that the first L7 proxy receives the identifier of the first tenant and the first data packet that are sent by the first L4 proxy includes: When a load of the second L7 proxy is higher than that of the first L7 proxy, the first L7 proxy receives the identifier of the first tenant and the first data packet that are sent by the first L4 proxy.

In a possible implementation, the service mesh system further includes a console connected to the proxy cluster; and the method further includes: The first L7 proxy receives and records configuration information of two or more services from the console, where the two or more services belong to a same tenant, or an output of one of the two or more services is an input of another service.

In a possible implementation, the service mesh system further includes a second service node, and the second service node hosts a second L4 proxy and a third service container group; that the first L7 proxy performs traffic management on the first data packet based on the configuration information of the first service includes: The first L7 proxy selects the third service container group as a target container group of the first data packet; and the first L7 proxy sends the first data packet and the identifier of the first tenant to the second L4 proxy; and the second L4 proxy is configured to: determine, based on the identifier of the first tenant, that the first tenant and a tenant to which the third service container group belongs are a same tenant; and send the first data packet to the third service container group.

According to a fourth aspect, a traffic management apparatus is provided. The apparatus is configured in a first L7 proxy in a service mesh system, the service mesh system includes a first service node and a proxy cluster, the first service node hosts a first L4 proxy and a first service container group of a first tenant, the proxy cluster hosts the first L7 proxy, the first L7 proxy includes configuration information of a plurality of services, different services in the plurality of services belong to a same tenant or different tenants, and the configuration information of the services is used by the first L7 proxy to perform traffic management on data packets of the services. The apparatus includes: a receiving module, configured to receive an identifier of the first tenant and a first data packet that are sent by the first L4 proxy, where the first data packet is received by the first L4 proxy from the first service container group; an identification module, configured to identify configuration information of a first service from the configuration information of the plurality of services based on the identifier of the first tenant, where the first service belongs to the first tenant; and a management module, configured to perform traffic management on the first data packet based on the configuration information of the first service.

In a possible implementation, the first service node further hosts a second service container group of a second tenant; the receiving module is further configured to receive an identifier of the second tenant and a second data packet that are sent by the first L4 proxy, where the second data packet is received by the first L4 proxy from the second service container group; the identification module is further configured to identify configuration information of a second service from the configuration information of the plurality of services based on the identifier of the second tenant, where the second service belongs to the second tenant; and the management module is further configured to perform traffic management on the second data packet based on the configuration information of the second service.

In a possible implementation, the first service includes a service corresponding to the first data packet and another service; and the management module is configured to: identify, based on an identifier of the service corresponding to the first data packet, configuration information of the service corresponding to the first data packet from the configuration information of the first service; and perform traffic management on the first data packet based on the configuration information of the service corresponding to the first data packet.

In a possible implementation, the proxy cluster further hosts a second L7 proxy, and the second L7 proxy includes configuration information of at least one service; and the receiving module is configured to receive the identifier of the first tenant and the first data packet that are sent by the first L4 proxy when a quantity of services belonging to the first tenant in the plurality of services is greater than a quantity of services belonging to the first tenant in the at least one service.

In a possible implementation, the proxy cluster further hosts a second L7 proxy, and the second L7 proxy also includes the configuration information of the first service; and the receiving module is configured to receive the identifier of the first tenant and the first data packet that are sent by the first L4 proxy when a load of the second L7 proxy is higher than that of the first L7 proxy.

In a possible implementation, the service mesh system further includes a console connected to the proxy cluster; and the receiving module is configured to receive and record configuration information of two or more services from the console, where the two or more services belong to a same tenant, or an output of one of the two or more services is an input of another service.

In a possible implementation, the service mesh system further includes a second service node, and the second service node hosts a second L4 proxy and a third service container group; the management module is configured to: select, by the first L7 proxy, the third service container group as a target container group of the first data packet; and send, by the first L7 proxy, the first data packet and the identifier of the first tenant to the second L4 proxy; and the second L4 proxy is configured to: determine, based on the identifier of the first tenant, that the first tenant and a tenant to which the third service container group belongs are a same tenant; and send the first data packet to the third service container group.

According to a fifth aspect, a computing device cluster is provided and includes at least one computing device. Each computing device includes a processor and a memory. The processor of the at least one computing device is configured to execute instructions stored in the memory of the at least one computing device, so that the computing device cluster performs the method provided in the first aspect.

According to a sixth aspect, a computer-readable storage medium is provided and includes computer program instructions. When the computer program instructions are executed by a computing device cluster, the computing device cluster performs the method provided in the second aspect.

According to a seventh aspect, a computer program product including instructions is provided. When the instructions are run by a computer device cluster, the computer device cluster is enabled to perform the method provided in the second aspect.

For beneficial effects of the second aspect to the seventh aspect, refer to the foregoing descriptions of the beneficial effects of the first aspect. Details are not described herein again.

### BRIEF DESCRIPTION OF DRAWINGS

FIG. 1 is a diagram of a structure of a service mesh system according to an embodiment of this application;
FIG. 2 is a diagram of a structure of an L7 proxy according to an embodiment of this application;
FIG. 3 is a diagram of a service configuration method according to an embodiment of this application;
FIG. 4 is a diagram of a service configuration method according to an embodiment of this application;
FIG. 5 is a flowchart of a service configuration method according to an embodiment of this application;
FIG. 6 is a flowchart of a traffic management method according to an embodiment of this application;
FIG. 7 is a flowchart of a traffic management method according to an embodiment of this application;
FIG. 8 is a diagram of a structure of a traffic management apparatus according to an embodiment of this application;
FIG. 9 is a diagram of a structure of a computing device according to an embodiment of this application;
FIG. 10 is a diagram of a structure of a computing device cluster according to an embodiment of this application; and
FIG. 11 is a diagram of a structure of a computing device cluster connected via a network according to an embodiment of this application.

### DESCRIPTION OF EMBODIMENTS

Solutions provided in embodiments of this application are hereinafter described with reference to the accompanying drawings. In embodiments of this application, "a plurality of" means two or more. The terms "first", "second", and the like are merely used to distinguish between similar objects, and are not necessarily used to describe a specific sequence or a quantity of the objects.

To facilitate understanding of the solutions provided in embodiments of this application, the following first describes technical terms that may be used in embodiments of this application.

A microservice architecture (microservice architecture) is a service-oriented architecture (service oriented architecture, SOA) that divides a complex system into a plurality of small services or applications. A small service or application may be referred to as a microservice. Each microservice is responsible for implementing a piece of independent service logic. Microservices are built around service functions and may be independently deployed. Microservices depend on each other to provide a series of functions. Microservices are easy to understand and modify, thereby bringing flexibility in language and framework selection. A microservice may run in a container (container). Containers in which a plurality of microservices with relatively high interdependencies are located may constitute a container group. In a K8S (Kubernetes) system, a container group may be encapsulated into a pod.

A service container is a container in which a microservice runs.

A service container group is a container group including a plurality of service containers. Generally, microservices running in service containers in a same container group are highly dependent on each other.

A service mesh (service mesh) is a technology that uses a data proxy outside a service container to perform service governance on a service (for example, a microservice) provided by the service container. Specifically, the data proxy obtains a data packet sent by the service container, and performs service governance (for example, traffic management) on the data packet, to send the data packet to a data proxy of a target container group. The data proxy of the target container group sends the data packet to the target container group. The behavior in which the data proxy obtains the data packet sent by the container group may be referred to as entering the service mesh, and the behavior in which the data proxy sends the data packet to the target container group is referred to as exiting the service mesh.

Service governance, also referred to as SOA governance (SOA governance), is a general term of means for ensuring normal working of microservice instances in the microservice architecture and normal communication between different microservice instances. A microservice instance may also be referred to as a service instance or a service container instance.

Traffic management, also referred to as traffic service governance, is a type of service governance. Traffic management generally includes traffic routing, load balancing, traffic control, traffic observation, and the like.

Configuration information of a service is information used by a data proxy to perform traffic management on a data packet of the service. The data packet of the service is a data packet sent to a service instance of the service. The configuration information of the service may include a quantity of service instances of the service, addresses of the service instances, a maximum processing capability of a service instance, and the like. For example, the maximum processing capability of the service instance may be a throughput of the service instance.

A data proxy, also referred to as a data plane proxy, is a module or an apparatus configured to perform service governance on a service instance on a data plane. The data proxy may be a process, and the data proxy process may run in a container. In a sidecar mode, the data proxy is a sidecar. In an ambient mode, data proxies include a transport-layer proxy and an application-layer proxy. In an open system interconnection (open system interconnection, OSI) network model, a transport layer is a layer 4 (layer 4, L4), and an application layer is a layer 7 (L7). Therefore, the transport-layer proxy may also be referred to as an L4 proxy, and the application-layer proxy may also be referred to as an L7 proxy. The L4 proxy is configured to implement low-level traffic management, such as routing a data packet based on a transmission control protocol (transmission control protocol, TCP). The L7 proxy is configured to implement advanced traffic management, such as routing a data packet based on metadata information (for example, a service name and a version) of a service in the data packet. Functions of the L4 proxy and the L7 proxy are described in detail below, and details are not described herein.

A node is configured to run a service container group and/or a data proxy. Typical nodes include a virtual machine (virtual machine, VM), a computer (such as a server), a bare metal server (bare metal server), and the like. A node configured to run a service container group may be referred to as a service node. In embodiments of this application, the service node also hosts the L4 proxy. A node configured to run the L7 proxy may be referred to as a proxy node. One or more service nodes may constitute a service cluster, and one or more proxy nodes may constitute a proxy cluster. The proxy cluster may also be referred to as a managed cluster or a proxy managed cluster.

In a related technology, to implement isolation between different tenants, each tenant exclusively occupies an L7 proxy. Specifically, a tenant is responsible for creating and maintaining an L7 proxy of the tenant, and the L7 proxy of the tenant performs traffic management only on a data packet sent by a service container group of the tenant. There are a large quantity of tenants in a service mesh system, and each tenant may create a plurality of L7 proxies. Therefore, there are a large quantity of L7 proxies in the service mesh system. Each L7 proxy runs in a separate container, and a large quantity of proxies require a large quantity of containers. Each container exclusively occupies fixed computing resources, such as central processing unit (central processing unit, CPU) and memory resources. Generally, a service of a tenant has a busy phase and an idle phase. In the idle phase of the service of the tenant, an L7 proxy of the tenant is in an idle state, resulting in low utilization of computing resources.

In addition, scheduling pressure of a large quantity of L7 proxies is relatively heavy. For example, a large amount of effort is required to select nodes for deploying the L7 proxies.

In addition, because an L7 proxy is exclusively occupied by a tenant, and quantities of services of different tenants may vary, a quantity of required L7 proxies also varies. Therefore, it is difficult for an administrator of the service mesh system to centrally create and maintain L7 proxies, and tenants need to create and maintain L7 proxies themselves. Maintenance of the L7 proxies by the tenants causes an increase in workload of the tenants. In addition, the tenants usually lack expertise to perform professional maintenance on the L7 proxies, resulting in a relatively high risk of L7 proxy failures. For example, during upgrade of an L7 proxy, because a tenant lacks expertise, there is a significant identification risk in the L7 proxy upgrade.

In addition, a tenant usually creates a plurality of L7 proxies, and the quantity of L7 proxies exceeds service requirements of the tenant, resulting in a waste of computing resources. In addition, each time a console in the related technology detects creation of an L7 proxy, the console sends, to the L7 proxy, configuration information of all services of a tenant to which the L7 proxy belongs. In other words, each L7 proxy of the tenant stores the configuration information of all the services of the tenant, resulting in highly redundant storage of the configuration information of the services in the L7 proxies and significant memory resource consumption.

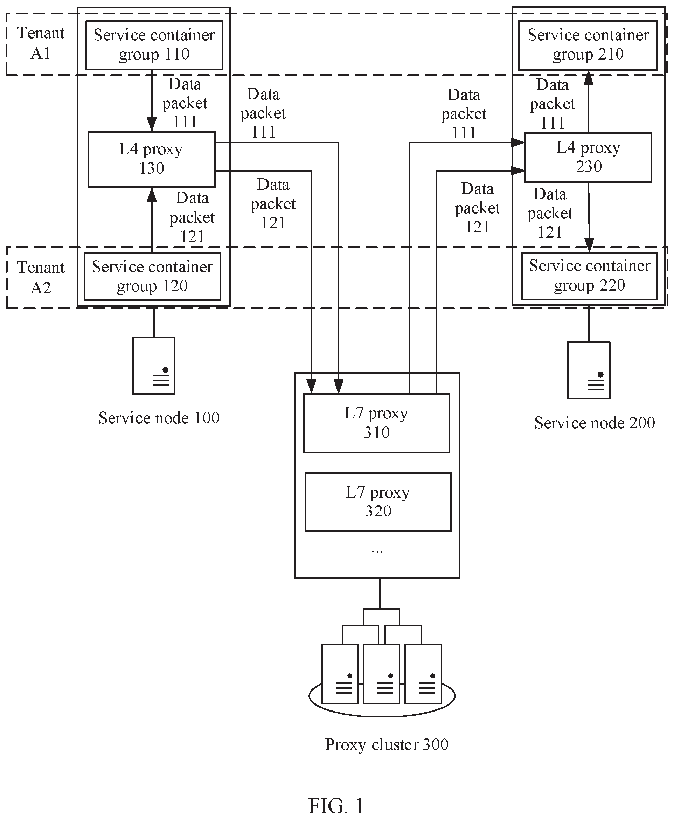

With reference to FIG. 1, an embodiment of this application provides a service mesh system. The service mesh system includes one or more service nodes and a proxy cluster. The service node hosts a service container group and an L4 proxy. The proxy cluster hosts an L7 proxy. The L7 proxy may include configuration information of a plurality of services. Different services in the plurality of services may respectively belong to different tenants. In other words, a same L7 proxy may include configuration information of services of different tenants. Configuration information of a service is used by the L7 proxy to perform traffic management on a data packet of the service. In other words, a same L7 proxy may perform traffic management on data packets of services of different tenants, that is, a plurality of tenants may share the L7 proxy. When a service container group of a tenant sends a data packet, the L4 proxy may send the data packet and an identifier of the tenant to the L7 proxy. The L7 proxy may identify configuration information of a service of the tenant from the configuration information of the plurality of services based on the identifier of the tenant, and then may perform traffic management on the data packet based on the configuration information of the service of the tenant.

In the service mesh system provided in this embodiment of this application, the plurality of tenants share the L7 proxy, thereby improving utilization of computing resources of the L7 proxy. Specifically, idle phases of services of different tenants are usually different. When services of some tenants are in an idle phase, services of other tenants may be in a busy phase. In this way, the L7 proxy can be prevented from being in an idle state, and utilization of the computing resources of the L7 proxy is improved.

In addition, the plurality of tenants share the L7 proxy, and not every tenant needs to create an L7 proxy, thereby reducing a quantity of L7 proxies in the service mesh system. This not only can reduce computing resources required for deploying the L7 proxy in the service mesh system, but also can reduce scheduling pressure of the L7 proxy.

In addition, the L7 proxy is shared by the plurality of tenants, indicating that the L7 proxy does not need to be created based on a tenant granularity. An administrator of the service mesh system may pre-create one or more L7 proxies in the proxy cluster, and each time a new service is created, a console of the service mesh system may send configuration information of the service to the L7 proxy, so that the L7 proxy can perform traffic management on a data packet of the service based on the configuration information of the service.

In addition, the administrator may centrally create L7 proxies to control redundancy of configuration information of services. Specifically, each time a new service is created, the console of the service mesh system may send configuration information of the service to N L7 proxies, where N is an integer greater than or equal to 1, and a value of N may be set by the administrator. In this way, highly redundant storage of the configuration information of the services in the L7 proxies can be avoided, and memory resources of the L7 proxies can be saved.

Next, the service mesh system provided in this embodiment of this application is described in detail.

As shown in FIG. 1, the service mesh system includes a plurality of service nodes, for example, a service node 100 and a service node 200. A plurality of service container groups and at least one L4 proxy may be deployed on a service node. For example, a service container group 110, a service container group 120, and an L4 proxy 130 are deployed on the service node 100. For another example, a service container group 210, a service container group 220, and an L4 proxy 230 are deployed on the service node 200. Different service container groups on a same service node may belong to different tenants, or may belong to a same tenant. A same tenant may deploy service container groups on different service nodes. For example, the service container group 110 and the service container group 210 belong to a tenant A1, and the service container group 120 and the service container group 220 belong to a tenant A2. An L4 proxy is at a node level. To be specific, an L4 proxy may manage data packets sent by a plurality of service container groups on a service node on which the L4 proxy is located. For example, an L7 proxy is selected for a data packet sent by a service container group, and a connection (for example, a TCP connection) is established between the L4 proxy and the selected L7 proxy.

The service mesh system includes a proxy cluster 300. The proxy cluster 300 includes at least one proxy node. One or more L7 proxies, such as an L7 proxy 310 and/or an L7 proxy 320, may be deployed in the proxy cluster 300. One L7 proxy may run on one or more proxy nodes in the proxy cluster 300. In addition, one or more L7 proxies may run on one proxy node.

The L7 proxy may include configuration information of a plurality of services, and the L7 proxy may perform traffic management on a data packet of a service based on configuration information of the service. Different services in the plurality of services may belong to a same tenant, or may belong to different tenants. In other words, different services in the plurality of services may be services provided by service container groups of a same tenant, or may be services provided by service container groups of different tenants. In other words, the L7 proxy does not perform traffic management at a tenant granularity any longer, but at a service granularity.

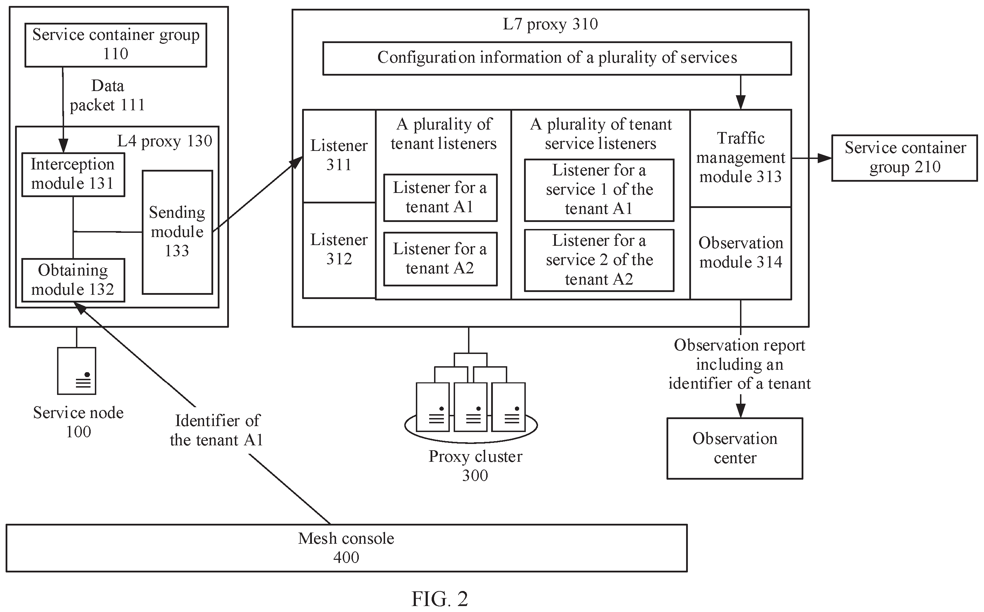

In some embodiments, as shown in FIG. 2, the L4 proxy 130 has an interception module 131, an obtaining module 132, and a sending module 133. The interception module 131 may intercept a data packet sent by a service container group on the service node 100, so that the data packet sent by the service container group enters a service mesh. For example, the service container group 110 sends a data packet 111, and the interception module 131 intercepts the data packet 111. The obtaining module 132 may parse the data packet 111 to obtain an identifier of the service container group 110. For example, the identifier of the container group may be an Internet protocol (Internet protocol, IP) address of the container group. The obtaining module 132 may parse the data packet 111 to obtain a source IP (source IP, SrcIP) address, so as to obtain an IP address of the service container group 110. Then the obtaining module 132 may obtain, from a mesh console 400 of the service mesh system and based on the identifier of the service container group 110, an identifier of a tenant to which the service container group 110 belongs.

The mesh console may also be referred to as a mesh control plane or a console, and is configured to control an L7 proxy, an L4 proxy, or the like in the service mesh system, and provide the administrator of the service mesh system with an interface (for example, an application programming interface (application programming interface, API)) for managing the service mesh system.

The sending module 133 in the L4 proxy 130 may send the data packet 111 and the identifier of the tenant to the L7 proxy 310.

In some embodiments, as shown in FIG. 2, the L7 proxy 310 includes one or more listeners, such as a listener 311 and a listener 312. In an example, the data packet 111 may include a service identifier of a service requested by the data packet 111. In an example, the service identifier may be a service IP (service IP, Svc IP). Different listeners in the L7 proxy 310 correspond to different services, and a listener is configured to listen to a data packet of a service corresponding to the listener. The listener may detect a service identifier in a data packet sent to the L7 proxy 310, and if a service represented by the service identifier is a service corresponding to the listener, the listener receives the data packet.

In some embodiments, as shown in FIG. 2, the L7 proxy 310 includes a plurality of tenant listeners. Different tenant listeners in the plurality of tenant listeners are configured to listen to and receive data packets of services of different tenants. For example, a listener for the tenant A1 is configured to listen to and receive a data packet (for example, the data packet 111) of a service of the tenant A1, and a listener for the tenant A2 is configured to listen to and receive a data packet (for example, a data packet 121) of a service of the tenant A2.

The L7 proxy 310 includes a plurality of tenant service listeners. A tenant service listener is configured to listen to and receive a service of a tenant. Because service identifiers of services of different tenants may be the same, in the L7 proxy, a service identifier is used in combination with an identifier of the tenant to identify the service. In other words, a unique identifier of a service includes a service identifier of the service and an identifier of a tenant of the service. For example, a unique identifier of a service 1 of the tenant A1 includes an identifier of the service 1 and an identifier of the tenant A1, and a unique identifier of a service 2 of the tenant A2 includes an identifier of the service 2 and an identifier of the tenant A2.

With continued reference to FIG. 2, the L7 proxy 310 includes a traffic management module 313. After receiving the data packet 111, the traffic management module 313 may obtain configuration information of the service of the tenant A1 from the stored configuration information of the plurality of services, and then perform traffic management on the data packet 111 based on the configuration information of the service of the tenant A1, for example, based on a service instance load balancing (load balancing, LB) policy, select a target service instance of the data packet 111, and send the data packet 111 to the selected target service instance.

In some embodiments, the L7 proxy 310 further includes an observation module 314. The observation module 314 is configured to observe and collect information such as a path and a time for sending a data packet to a service instance. The observation module 314 obtains an observation report based on the observed information, and reports the observation report to an observation center of the service mesh system.

Functions of the L7 proxy are briefly described above. Next, a deployment manner of the L7 proxy is described.

In this embodiment of this application, the L7 proxy deployed in the proxy cluster 300 is created by the administrator of the service mesh system. In some embodiments, the administrator of the service mesh system may create one or more L7 proxies in the proxy cluster 300 before the service mesh system is formally put into use. For example, the administrator of the service mesh system may create a corresponding quantity of L7 proxies based on a capacity of the service mesh system. The capacity of the service mesh system is a maximum quantity of service container groups that can be deployed in the service mesh system.

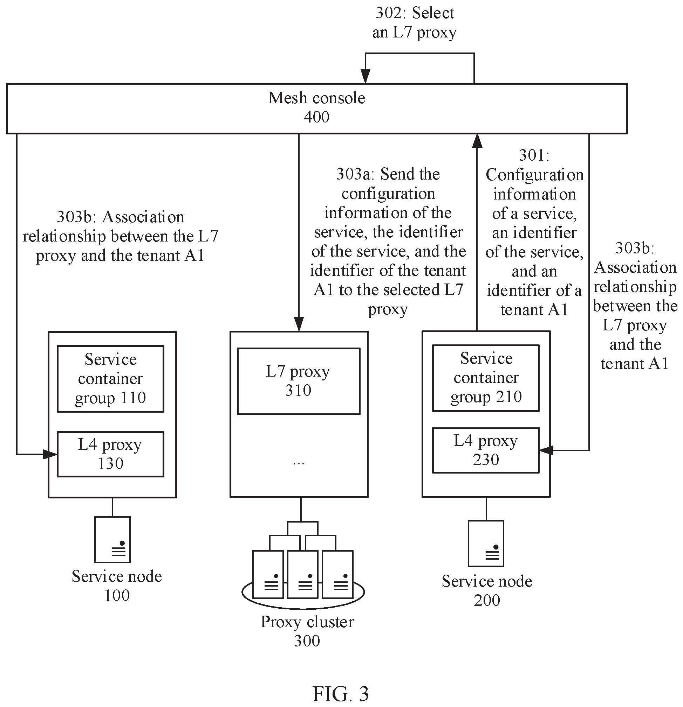

With reference to FIG. 3, each time a service of a tenant is created, the mesh console 400 may send configuration information of the service, an identifier of the service, and the identifier of A1 to one or more L7 proxies, so that the L7 proxy can perform traffic management on a data packet of the service based on the configuration information of the service. In some embodiments, as shown in FIG. 3, when the service of the tenant A1 is created on the service node, the service node may perform step 301 to send the configuration information of the service, the identifier of the service, and the identifier of the tenant A1 to the mesh console 400. The mesh console 400 may perform step 302 to select an L7 proxy for the service.

After the L7 proxy is selected, the mesh console 400 performs step 303a to send the configuration information of the service, the identifier of the service, and the identifier of the tenant A1 to the selected L7 proxy. When receiving the configuration information of the service, the identifier of the service, and the identifier of the tenant A1, the L7 proxy may associate the configuration information of the service, the identifier of the service, and the identifier of the tenant A1, to obtain an association relationship between the configuration information of the service, the identifier of the service, and the identifier of the tenant A1. For example, in an association list, the configuration information of the service, the identifier of the service, and the identifier of the tenant A1 are recorded. In this way, the configuration information of the service of the tenant A1 may be obtained by using the identifier of the tenant A1, or the configuration information of the service of the tenant A1 may be obtained by using the identifier of the tenant A1 and the identifier of the service.

The mesh console further performs step 303b to send the association relationship between the selected L7 proxy and the tenant A1 to an L4 proxy on each service node in the service mesh system, so that the L4 proxy can identify, based on the association relationship, the L7 proxy including the configuration information of the service of the tenant A1.

A service container group may include a plurality of containers. As a service instance, each container may provide a service. Services provided by containers in a same service container group are closely related to each other. For example, an output of a service provided by one container is usually an input of a service provided by another container. Containers in a same container group share storage space, where the storage space may be a memory or a cache. In this way, if data packets of two or more services that need to be sequentially performed are scheduled to a same service container group, containers in the same service container group process the data packets of the two or more services, and related data does not need to be transferred between container groups. For example, a container B11 and a container B12 in a service container group B1 provide a service C1 and a service C2 respectively, and a container B21 and a container B22 in a service container group B2 also provide the service C1 and the service C2 respectively. In addition, an output of the service C1 is an input of the service C2. A data packet of the service C1 and a data packet of the service C2 need to be processed sequentially. If the data packets of the two services are both scheduled to the service container group B1, a result of processing the data packet of the service C1 by the container B11 (that is, an output of the service C1) may be stored in storage space shared by the container B11 and the container B12. When processing the data packet of the service C2, the container B12 may obtain the output of the service C1 from the storage space, thereby reducing data transmission between the service container groups. If the data packet of the service C1 is scheduled to the service container group B1, and the data packet of the service C2 is scheduled to the service container group B2, when processing the data packet of the service C2, the service container group B2 needs to obtain the output of the service C1 from the service container group B1. This requires data transmission between the service container groups.

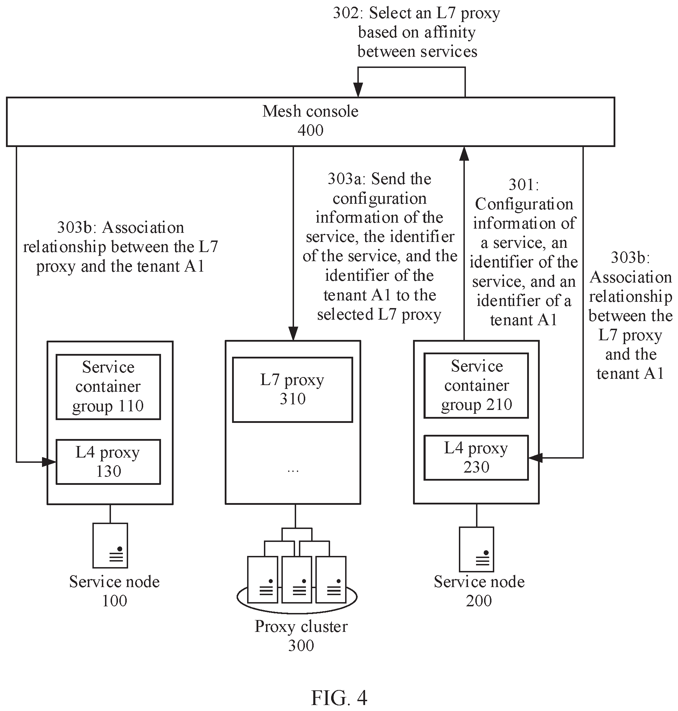

With reference to FIG. 4, the mesh console 400 selects an L7 proxy based on affinity between services in step 302, to send configuration information of a plurality of services with affinity to a same L7 proxy.

In some embodiments, services of a same tenant have affinity. Therefore, configuration information of the services of the same tenant may be sent to a same L7 proxy. When the L7 proxy performs traffic management on data packets of two or more services of the same tenant, the data packets of the two or more services share a routing cache. The routing cache stores an address of a target service instance (that is, one or some specific service container groups) of the data packets. When the two or more services may be provided by a same service container group, the L7 proxy may send the data packets of the two or more services to a same target service instance by sharing the address in the routing cache, to schedule the data packets of the two or more services to the same service container group. The two or more services may be two or more services that need to be sequentially performed. In this way, data transmission between service container groups can be reduced.

In some embodiments, there is affinity between the two or more services that need to be sequentially performed. Therefore, configuration information of the two or more services that need to be sequentially performed may be sent to the same L7 proxy. When the L7 proxy performs traffic management on the data packets of the two or more services, the two or more services share the routing cache. The routing cache stores the address of the target service instance of the data packets. When the two or more services are provided by the same service container group, the L7 proxy may send the data packets of the two or more services to the same target service instance by sharing the address of the routing cache, to schedule the data packets of the two or more services to the same service container group. In this way, data transmission between service container groups can be reduced.

The services with affinity are services of the same tenant or services that need to be sequentially performed. The services that need to be sequentially performed also belong to the same tenant. Therefore, the services with affinity are at a tenant granularity. An L7 proxy including configuration information of services that are of a tenant and that have affinity may be referred to as an affinity L7 proxy of the tenant.

In some embodiments, the proxy cluster 300 hosts a plurality of L7 proxies. In step 302, an L7 proxy including configuration information of the fewest services may be selected among the plurality of L7 proxies. In other words, when a service is created, configuration information of the created service is sent to the L7 proxy including the configuration information of the fewest services. In an example, when an L7 proxy is selected based on affinity between services, the L7 proxy including the configuration information of the fewest services is selected from the plurality of L7 proxies, so that the configuration information of the created service is sent to the L7 proxy including the configuration information of the fewest services, and the L7 proxy including the configuration information of the fewest services performs traffic management on a data packet of the created service, to implement load balancing.

In some embodiments, the proxy cluster 300 hosts a plurality of L7 proxies. When an L7 proxy is selected based on affinity between services, an L7 proxy including configuration information of the fewest tenants is selected among the plurality of L7 proxies, so that configuration information of a created service is sent to the L7 proxy including the configuration information of the fewest tenants, and the L7 proxy including the configuration information of the fewest tenants performs traffic management on a data packet of the created service. Configuration information of a tenant is configuration information of a service of the tenant. Services that are of a tenant and that have affinity are sent to the L7 proxy including the configuration information of the fewest tenants. This can prevent a same L7 proxy from simultaneously becoming an affinity proxy of a plurality of tenants, or reduce a risk that a same L7 proxy simultaneously becomes an affinity L7 proxy of a plurality of tenants.

In some embodiments, an annotation (annotation) part of a YAML file for creating a service includes affinity between services. The mesh console 400 may obtain the annotation part of the YAML file of the service, and may obtain, by using the annotation part of the YAML file of the service, which services have affinity with each other. YAML is a markup language and also a data serialization representation format, and is usually used to create a service. Creating a service may be specifically creating a container that provides the service.

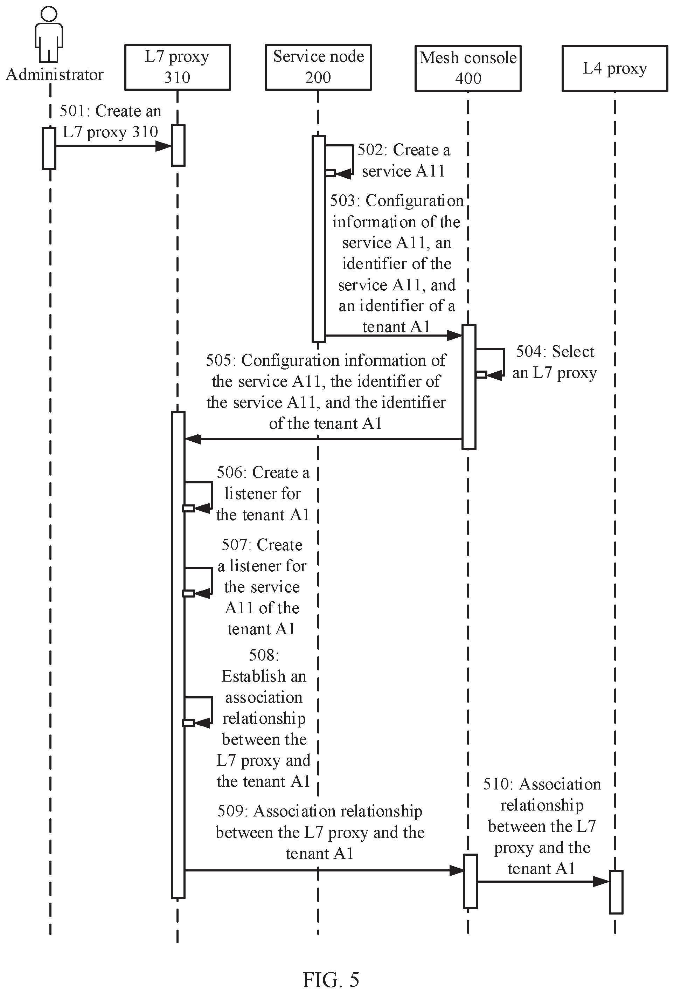

In some embodiments, an L7 proxy may be deployed by using the method shown in FIG. 5.

First, the administrator of the service mesh system may create one or more L7 proxies such as the L7 proxy 310 in the proxy cluster 300 in step 501.

The tenant A1 may create a service A11 on the service node 200 in step 502. Creating a service means creating a service container group, and a container in the created service container group provides the service. The service node 200 may send configuration information of the service A11, an identifier of the service A11, and the identifier of the tenant A1 to the mesh console 400 in step 503.

The mesh console 400 may select an L7 proxy for the service A11 in step 504. The L7 proxy may be selected for the service A11 based on affinity between services. For details, refer to the foregoing description. Details are not described herein again.

It may be specified that the L7 proxy selected by the mesh console 400 in step 504 is the L7 proxy 310. In step 505, the mesh console 400 sends the configuration information of the service A11, the identifier of the service A11, and the identifier of the tenant A1 to the L7 proxy 310.

The L7 proxy 310 may establish an association relationship between the configuration information of the service A11, the identifier of the service A11, and the identifier of the tenant A1. The L7 proxy 310 may save the configuration information of the service A11 and the association relationship. In some embodiments, the L7 proxy 310 may create a listener for the tenant A1 in step 506. The listener for the tenant A1 is configured to listen to a data packet of a service of the tenant A1. In some embodiments, the L7 proxy 310 may create a listener for the service A11 of the tenant A1 in step 507. The listener for the service A11 of the tenant A1 is configured to listen to a data packet of the service A11 of the tenant A1.

The L7 proxy 310 may further establish an association relationship between the L7 proxy and the tenant A1 in step 508, and send the association relationship between the L7 proxy and the tenant A1 to the mesh console 400 in step 509. The mesh console 400 may send the association relationship between the L7 proxy and the tenant A1 to each L4 proxy in the service mesh system. The L4 proxy may save the received association relationship.

In some embodiments, the association relationship between the L7 proxy and the tenant A1 includes an association relationship between the L7 proxy and the service A11 of the tenant A1. In some embodiments, the association relationship between the L7 proxy and the tenant A1 is specifically an association relationship between an identifier of the L7 proxy and the identifier of the tenant A1. The identifier of the L7 proxy and the identifier of the tenant A1 may be recorded in the association list, to associate the L7 proxy with the tenant A1.

In this way, deployment of the L7 proxy can be completed, and the L7 proxy can perform traffic management on a data packet of a service of a related tenant. By using the traffic management method provided in this embodiment of this application, the L7 proxy can implement traffic management on a data packet of a service of a related tenant.

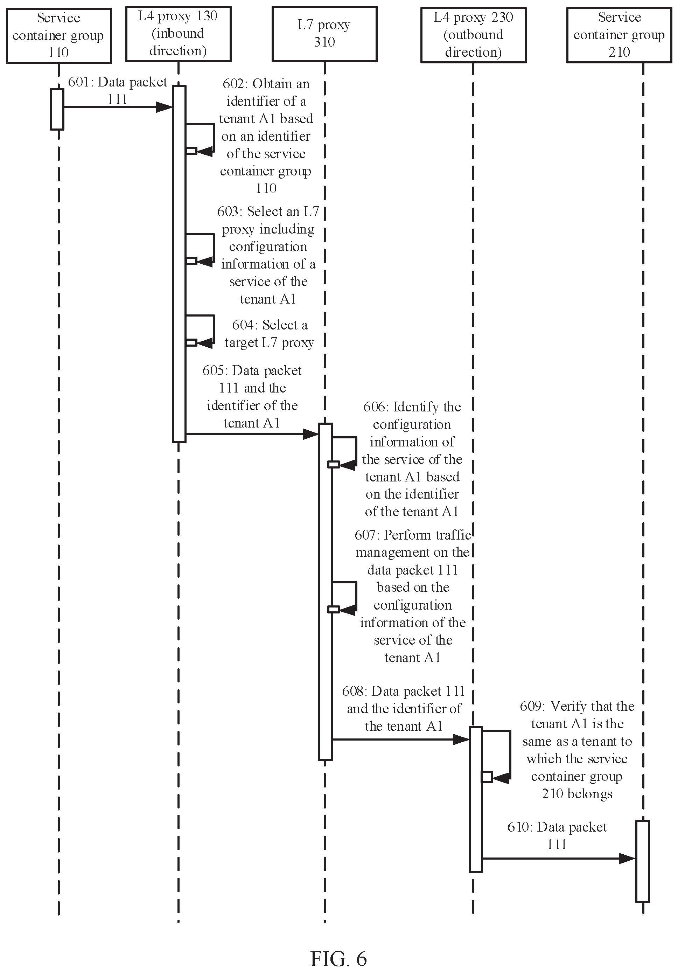

Next, with reference to FIG. 6, a traffic management method provided in an embodiment of this application is described by using an L7 proxy 310 and a tenant A1 as examples.

The L7 proxy 310 includes configuration information of a plurality of services, different services in the plurality of services belong to a same tenant or different tenants, and configuration information of a service is used by the L7 proxy 310 to perform traffic management on a data packet of the service. As shown in FIG. 6, the method includes the following steps.

In step 601, a service container group 110 sends a data packet 111. The service container group 110 belongs to the tenant A1, and the data packet 111 may be a data packet used to request to access a service A11 of the tenant A1, that is, the data packet 111 is a service request used to request to access the service A11. The service container group 110 includes at least one service container, and the data packet 111 may be specifically sent by one or more service containers in the at least one service container.

An L4 proxy 130 on a service node (that is, a service node 100) on which the service container group 110 is located, as an L4 proxy in an inbound direction of a service mesh, may intercept the data packet 111. When intercepting the data packet 111, the L4 proxy 130 may obtain an identifier of the service container group 110. For example, the L4 proxy 130 obtains an Src IP address of the data packet 111 by parsing the data packet 111. The Src IP address of the data packet 111 is an IP address of the service container group 110, and is an identifier of the service container group 110. In step 602, the L4 proxy 130 may obtain, based on the identifier of the service container group 110, an identifier of a tenant (that is, the tenant A1) to which the service container group 110 belongs. For example, the L4 proxy 130 may query the identifier of the tenant A1 on a mesh console 400 based on the identifier of the service container group 110.

In step 603, the L4 proxy 130 may select, based on the identifier of the tenant A1, an L7 proxy including configuration information of a service of the tenant A1 from L7 proxies deployed in a proxy cluster 300. Generally, a plurality of L7 proxies are deployed in the proxy cluster 300, and some of the L7 proxies include the configuration information of the service of the tenant A1. Therefore, the L7 proxy including the configuration information of the service of the tenant A1 needs to be selected from the plurality of L7 proxies based on the identifier of the tenant A1. The L4 proxy stores an association relationship between the L7 proxy and the tenant, and the L7 proxy associated with the tenant includes the configuration information of the service of the tenant. The L4 proxy 130 may obtain, based on the identifier of the tenant A1 and the association relationship between the L7 proxy and the tenant, the L7 proxy associated with the tenant A1, that is, obtain the L7 proxy including the configuration information of the service of the tenant A1.

In some embodiments, the tenant A1 may have a plurality of services, and configuration information of the plurality of services may be in different L7 proxies. In other words, not all L7 proxies including configuration information of servicesof the tenant A1 may include the configuration information of the service A11. In step 603, the L7 proxy including the configuration information of the service A11 of the tenant A1 is selected. The L7 proxies including the configuration information of the services of the tenant A1 may be first selected based on the identifier of the tenant A1. Then, based on an identifier of the service A11, the L7 proxy including the configuration information of the service A11 is selected from the L7 proxies including the configuration information of the services of the tenant A1.

When there is only one L7 proxy including the configuration information of the service A11, the L7 proxy including the configuration information of the service A11 of the tenant A1 is used as a target L7 proxy of the data packet 111.

When there are a plurality of L7 proxies including the configuration information of the service A11, the L4 proxy 130 may select the target L7 proxy of the data packet 111 from the plurality of L7 proxies.

In some embodiments, if an L7 proxy supports a larger quantity of services of the tenant A1, a possibility that the L7 proxy becomes the target L7 proxy of the data packet 111 is higher. That an L7 proxy supports a service means that the L7 proxy includes configuration information of the service. In other words, an L7 proxy including configuration information of a service may be referred to as an L7 proxy supporting the service. For example, the L7 proxy 310 includes configuration information of N services, an L7 proxy 320 includes configuration information of M services, and both the N services and the M services include the service A11. Both N and M are integers greater than or equal to 1. If a quantity of services belonging to the tenant A1 in the N services is greater than a quantity of services belonging to the tenant A1 in the M services, the L4 proxy 130 selects the L7 proxy 310 as the target L7 proxy of the data packet 111. In other words, when the quantity of services belonging to the tenant A1 in the services supported by the L7 proxy 310 is greater than the quantity of services belonging to the tenant A1 in the services supported by the L7 proxy 320, the L7 proxy 310 serves as the target L7 proxy of the data packet 111.

In some embodiments, if load of an L7 proxy is lower, a possibility that the L7 proxy becomes the target L7 proxy of the data packet 111 is higher. For example, both the L7 proxy 310 and the L7 proxy 320 include the configuration information of the service A11. When a load of the L7 proxy 320 is higher than that of the L7 proxy 310, the L7 proxy 310 serves as the target L7 proxy of the data packet 111. The load of the L7 proxy may be represented by a ratio of a used capacity of the L7 proxy to a maximum capacity of the L7 proxy. The ratio is positively correlated with the load of the L7 proxy. In an example, the maximum capacity is a maximum quantity of connections, and the used capacity is a quantity of used connections or a quantity of actual connections. The connection herein is a connection between the L7 proxy and a service container group that sends a data packet. Specifically, a data packet on which the L7 proxy performs traffic management is sent by a service container group. When the L4 proxy selects the L7 proxy to perform traffic management on a data packet sent by a service container group, the L4 proxy establishes a connection between the L7 proxy and the service container group. Therefore, the maximum quantity of connections may also be referred to as a maximum quantity of service container groups that the L7 proxy can connect to, and the quantity of used connections may also be referred to as a quantity of service container groups that the L7 proxy has connected to. In an example, the maximum capacity is a maximum quantity of data packets that can be received by the L7 proxy per unit time, and the used capacity is a quantity of data packets actually received by the L7 proxy per unit time.

In some embodiments, a scheduling coefficient of each L7 proxy including the configuration information of the service A11 may be calculated, and then an L7 proxy with the largest scheduling coefficient is used as the target L7 proxy of the data packet 111. A formula for calculating the scheduling coefficient is as follows:

Scheduling coefficient of the L7 proxy = Weight of the tenant x (Quantity of services belonging to the tenant A1 in services supported by the L7 proxy/Total quantity of services supported by the L7 proxy) x (1 - Used capacity of the L7 proxy/Maximum capacity of the L7 proxy).

A weight of the tenant may be a preset value. An administrator may set different weights for different L7 proxies for a tenant, to set priorities of the L7 proxies for performing traffic management on a data packet of a service of the tenant.

In the foregoing manner, the target L7 proxy of the data packet 111 may be obtained.

The obtained target L7 proxy of the data packet 111 may be set as the L7 proxy 310. The L4 proxy 130 sends the data packet 111 and the identifier of the tenant A1 to the L7 proxy 310 in step 605. In some embodiments, the L4 proxy 130 may send the data packet 111 and the identifier of the tenant A1 to the L7 proxy 310 by performing a destination address translation (destination network address translation, DNAT) operation.

In step 606, the L7 proxy may identify, based on the identifier of the tenant A1, the configuration information of the service of the tenant A1 in the configuration information of the plurality of services included in the L7 proxy 310. As described above, there is an association relationship between the identifier of the tenant A1 and the configuration information of the service of the tenant A1. The L7 proxy may identify the configuration information of the service of the tenant A1 based on the association relationship and the identifier of the tenant A1.

Then, in step 607, the L7 proxy may perform traffic management on the data packet 111 based on the configuration information of the service of the tenant A1 identified in step 606.

The data packet 111 is a data packet of the service A11 of the tenant A1. If the configuration information of the service of the tenant A1 identified in step 606 is the configuration information of the service A11, in step 607, traffic management may be performed on the data packet 111 directly based on the configuration information of the service of the tenant A1 identified in step 606.

If configuration information of services of the tenant A1 identified in step 606 include configuration information of another service of the tenant A1 in addition to the configuration information of the service A11, in step 607, first, the configuration information of the service A11 is identified from the configuration information of the services of the tenant A1 identified in step 606. Then traffic management is performed on the data packet 111 based on the configuration information of the service A11.

The data packet 111 includes an identifier of a service requested by the data packet 111, that is, the identifier of the service A11. The L7 proxy 310 may parse the data packet 111 to obtain the identifier of the service A11. Then, based on the identifier of the service A11, the L7 proxy 310 identifies the configuration information of the service A11 from the configuration information of the services of the tenant A1 identified in step 606. Specifically, as described above, there is an association relationship between the identifier of the service and the configuration information of the service. The L7 proxy 310 may identify the configuration information of the service A11 based on the association relationship and the identifier of the service A11.

In some embodiments, the traffic management performed by the L7 proxy 310 on the data packet 111 may include: selecting a target service instance of the data packet 111. For example, the data packet 111 is a service request, and the L7 proxy 310 may select a service instance for executing the service request. It may be specified that the L7 proxy 310 selects a service container group 210 as the target service instance of the data packet 111, that is, selects a service container in the service container group 210 to process the data packet 111. In this case, the L7 proxy 310 may send, in step 608, the data packet 111 to an L4 proxy (that is, an L4 proxy 230) on a service node (that is, a service node 200) on which the service container group 210 is located. In step 610, as an L4 proxy in an outbound direction of the service mesh, the L4 proxy 230 may forward the received data packet 111 to the service container group 210. In some embodiments, the L4 proxy 230 may send the data packet 111 to the service container group 210 by performing a DNAT operation.

In some embodiments, in step 608, the L7 proxy 310 sends the data packet 111 and the identifier of the tenant A1 to the L4 proxy 230. The L4 proxy 230 may perform step 609 to verify, based on the identifier of the tenant A1, that the tenant A1 is the same as a tenant to which the service container group 210 belongs. Specifically, when selecting the service container group 210 as the service instance of the data packet 111, the L7 proxy 310 may add an identifier of the service container group 210 to the data packet 111. For example, the identifier of the service container group 210 is an address of the service container group 210, and the L7 proxy 310 adds the address of the service container group 210 to a field corresponding to a destination address (destination) of the data packet 111. The L4 proxy 230 may parse the data packet 111 to obtain the identifier of the service container group 210. Then the L4 proxy 230 may query, on the mesh console 400 based on the identifier of the service container group 210, the tenant to which the service container group 210 belongs. In step 609, the L4 proxy 230 may determine whether the identifier of the tenant A1 is the same as an identifier of the tenant to which the service container group 210 belongs. If the identifiers are the same, the tenant A1 and the tenant to which the service container group 210 belongs are the same. If the identifiers are different, the tenant A1 and the tenant to which the service container group 210 belongs are different.

The L4 proxy 230 performs step 610 only when determining that the tenant A1 and the tenant to which the service container group 210 belongs are the same. This further ensures isolation between tenants.

In some embodiments, when the L4 proxy 230 determines that the tenant A1 and the tenant to which the service container group 210 belongs are different, the L4 proxy 230 may generate an alarm or report an error.

In some embodiments, the L7 proxy 310 performs a service of another tenant, such as a service of a tenant A2, in addition to supporting the service of the tenant A1. In other words, the L7 proxy 310 further includes configuration information of the service of the tenant A2. It may be specified that the service node 100 hosts a service container group 120 of the tenant A2. When the service container group 120 sends a data packet 121, the L4 proxy 130 may send the data packet 121 and an identifier of the tenant A2 to the L7 proxy 310. The L7 proxy 310 may identify, based on the identifier of the tenant A2, the configuration information of the tenant A2 from the configuration information of the plurality of services included in the L7 proxy 310. Then the L7 proxy 310 may perform traffic management on the data packet 121 based on the configuration information of the tenant A2. For example, through traffic management, the L7 proxy 310 selects a service container group 220 on the service node 200 as a target service instance of the data packet 121. The L7 proxy 310 sends the data packet 121 and the identifier of the tenant A2 to the L4 proxy 230. When determining, based on the identifier of the tenant A2, that the tenant A2 and a tenant to which the service container group 220 belongs are the same, the L4 proxy 230 sends the data packet 121 to the service container group 220.

In conclusion, the same L7 proxy can perform traffic management on data packets of the services of the plurality of tenants, so that the plurality of tenants share the L7 proxy. This can improve utilization of computing resource of the L7 proxy and reduce scheduling pressure of the L7 proxy.

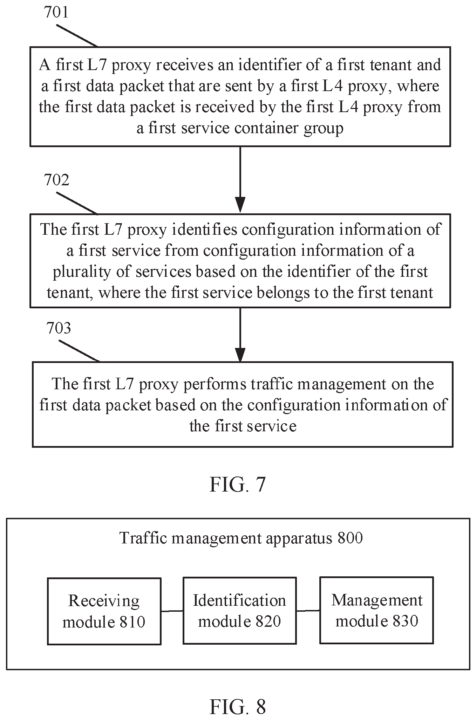

Based on the content described above, an embodiment of this application further provides a traffic management method. The method may be performed by a first L7 proxy in a service mesh system. The service mesh system includes a first service node and a proxy cluster, the first service node hosts a first L4 proxy and a first service container group of a first tenant, the proxy cluster hosts the first L7 proxy, the first L7 proxy includes configuration information of a plurality of services, different services in the plurality of services belong to a same tenant or different tenants, and the configuration information of the services is used by the first L7 proxy to perform traffic management on data packets of the services. The service mesh system herein may be the service mesh system shown in FIG. 1, the proxy cluster may be the proxy cluster 300 described above, the first L7 proxy may be specifically the L7 proxy 310 described above, the first service node may be the service node 100 described above, the first L4 proxy may be the L4 proxy 130 described above, and the first tenant may be the tenant A1 described above. As shown in FIG. 7, the method includes the following steps.

Step 701: The first L7 proxy receives an identifier of the first tenant and a first data packet that are sent by the first L4 proxy, where the first data packet is received by the first L4 proxy from the first service container group. The first service container group may be the service container group 110 described above, and the first data packet may be the data packet 111 described above. For a specific implementation of step 701, refer to the foregoing descriptions of step 601 to step 605 in FIG. 6. Details are not described herein again.

Step 702: The first L7 proxy identifies configuration information of a first service from the configuration information of the plurality of services based on the identifier of the first tenant, where the first service belongs to the first tenant. For a specific implementation of step 702, refer to the foregoing description of step 606 in FIG. 6. Details are not described herein again.

Step 703: The first L7 proxy performs traffic management on the first data packet based on the configuration information of the first service. For a specific implementation of step 702, refer to the foregoing description of step 607 in FIG. 6. Details are not described herein again.

In some embodiments, the first service node further hosts a second service container group of a second tenant; and the method includes: The first L7 proxy receives an identifier of the second tenant and a second data packet that are sent by the first L4 proxy, where the second data packet is received by the first L4 proxy from the second service container group; the first L4 proxy sends the identifier of the second tenant and the second data packet to the first L7 proxy; the first L7 proxy identifies configuration information of a second service from the configuration information of the plurality of services based on the identifier of the second tenant, where the second service belongs to the second tenant; and the first L7 proxy performs traffic management on the second data packet based on the configuration information of the second service. The second tenant may be the tenant A2 described above, the second service container group may be the service container group 120 described above, and the second data packet may be the data packet 121 described above.

In some embodiments, the first service includes a service corresponding to the first data packet and another service; and that the first L7 proxy performs traffic management on the first data packet based on the configuration information of the first service includes: The first L7 proxy identifies, based on an identifier of the service corresponding to the first data packet, configuration information of the service corresponding to the first data packet from the configuration information of the first service; and the first L7 proxy performs traffic management on the first data packet based on the configuration information of the service corresponding to the first data packet. The service corresponding to the first data packet may be the service A11 described above. For a specific implementation of this embodiment, refer to the foregoing description of step 606 in FIG. 6. Details are not described herein again.

In some embodiments, for the service corresponding to the first data packet, the proxy cluster further hosts a second L7 proxy, and the second L7 proxy includes configuration information of at least one service; and that the first L7 proxy receives the identifier of the first tenant and the first data packet that are sent by the first L4 proxy includes: When a quantity of services belonging to the first tenant in the plurality of services is greater than a quantity of services belonging to the first tenant in the at least one service, the first L7 proxy receives the identifier of the first tenant and the first data packet that are sent by the first L4 proxy. The second L7 proxy may be the L7 proxy 320 described above. For a specific implementation of this embodiment, refer to the foregoing descriptions of step 603 to step 605 in FIG. 6. Details are not described herein again.

In some embodiments, the proxy cluster further hosts a second L7 proxy, and the second L7 proxy also includes the configuration information of the first service; and that the first L7 proxy receives the identifier of the first tenant and the first data packet that are sent by the first L4 proxy includes: When a load of the second L7 proxy is higher than that of the first L7 proxy, the first L7 proxy receives the identifier of the first tenant and the first data packet that are sent by the first L4 proxy. The second L7 proxy may be the L7 proxy 320 described above. For a specific implementation of this embodiment, refer to the foregoing descriptions of step 603 to step 605 in FIG. 6. Details are not described herein again.

In some embodiments, the service mesh system further includes a console connected to the proxy cluster; and the method further includes: The first L7 proxy receives and records configuration information of two or more services from the console, where the two or more services belong to a same tenant, or an output of one of the two or more services is an input of another service. For a specific implementation of this embodiment, refer to the foregoing descriptions of the embodiments shown in FIG. 3 to FIG. 5. Details are not described herein again.

In some embodiments, the service mesh system further includes a second service node, and the second service node hosts a second L4 proxy and a third service container group; that the first L7 proxy performs traffic management on the first data packet based on the configuration information of the first service includes: The first L7 proxy selects the third service container group as a target container group of the first data packet; and the first L7 proxy sends the first data packet and the identifier of the first tenant to the second L4 proxy; and the second L4 proxy is configured to determine, based on the identifier of the first tenant, that the first tenant and a tenant to which the third service container group belongs are a same tenant; and send the first data packet to the third service container group. The second service node may be the service node 200 described above, and the third service container group may also be the service container group 210 described above. For a specific implementation of this embodiment, refer to the foregoing descriptions of step 608 to step 610 in FIG. 6. Details are not described herein again.

According to the foregoing method, a same L7 proxy may include configuration information of services of a plurality of tenants, and when traffic management needs to be performed on a data packet of a service of a tenant, the L7 proxy obtains an identifier of the tenant, and obtains configuration information of the service of the tenant from the configuration information of the services of the plurality of tenants based on the identifier of the tenant, so that traffic management can be performed on the data packet of the service of the tenant based on the configuration information of the service of the tenant. In this way, the same L7 proxy can perform traffic management on data packets of the services of the plurality of tenants, so that the plurality of tenants share the L7 proxy. Sharing the L7 proxy among the plurality of tenants can improve utilization of computing resources of the L7 proxy, reduce scheduling pressure of the L7 proxy, and the like.

With reference to FIG. 8, an embodiment of this application provides a traffic management apparatus 800. The apparatus 800 is configured in a first L7 proxy in a service mesh system, the service mesh system includes a first service node and a proxy cluster, the first service node hosts a first L4 proxy and a first service container group of a first tenant, the proxy cluster hosts the first L7 proxy, the first L7 proxy includes configuration information of a plurality of services, different services in the plurality of services belong to a same tenant or different tenants, and the configuration information of the services is used by the first L7 proxy to perform traffic management on data packets of the services. As shown in FIG. 8, the apparatus 800 includes:
a receiving module 810, configured to receive an identifier of the first tenant and a first data packet that are sent by the first L4 proxy, where the first data packet is received by the first L4 proxy from the first service container group;
an identification module 820, configured to identify configuration information of a first service from the configuration information of the plurality of services based on the identifier of the first tenant, where the first service belongs to the first tenant; and
a management module 830, configured to perform traffic management on the first data packet based on the configuration information of the first service.

In some embodiments, the first service node further hosts a second service container group of a second tenant; the receiving module 810 is further configured to receive an identifier of the second tenant and a second data packet that are sent by the first L4 proxy, where the second data packet is received by the first L4 proxy from the second service container group; the identification module 820 is further configured to identify configuration information of a second service from the configuration information of the plurality of services based on the identifier of the second tenant, where the second service belongs to the second tenant; and the management module 830 is further configured to perform traffic management on the second data packet based on the configuration information of the second service.

In some embodiments, the first service includes a service corresponding to the first data packet and another service; and the management module 830 is configured to: identify, based on an identifier of the service corresponding to the first data packet, configuration information of the service corresponding to the first data packet from the configuration information of the first service; and perform traffic management on the first data packet based on the configuration information of the service corresponding to the first data packet.

In some embodiments, the proxy cluster further hosts a second L7 proxy, and the second L7 proxy includes configuration information of at least one service; and the receiving module 810 is configured to receive the identifier of the first tenant and the first data packet that are sent by the first L4 proxy when a quantity of services belonging to the first tenant in the plurality of services is greater than a quantity of services belonging to the first tenant in the at least one service.

In some embodiments, the proxy cluster further hosts a second L7 proxy, and the second L7 proxy also includes the configuration information of the first service; and the receiving module 810 is configured to receive the identifier of the first tenant and the first data packet that are sent by the first L4 proxy when a load of the second L7 proxy is higher than that of the first L7 proxy.

In some embodiments, the service mesh system further includes a console connected to the proxy cluster; and the receiving module 810 is configured to receive and record configuration information of two or more services from the console, where the two or more services belong to a same tenant, or an output of one of the two or more services is an input of another service.

In some embodiments, the service mesh system further includes a second service node, and the second service node hosts a second L4 proxy and a third service container group; the management module 830 is configured to: select, by the first L7 proxy, the third service container group as a target container group of the first data packet; and send, by the first L7 proxy, the first data packet and the identifier of the first tenant to the second L4 proxy; and the second L4 proxy is configured to: determine, based on the identifier of the first tenant, that the first tenant and a tenant to which the third service container group belongs are a same tenant; and send the first data packet to the third service container group.

The receiving module 810, the identification module 820, and the management module 830 may all be implemented by using software, or may be implemented by using hardware. For example, the following uses the receiving module 810 as an example to describe an implementation of the receiving module 810. Similarly, for implementations of the identification module 820 and the management module 830, refer to the implementation of the receiving module 810.

A module is used as an example of a software functional unit. The receiving module 810 may include code that is run on a computing instance. The computing instance may include at least one of a physical host (computing device), a virtual machine, and a container. Further, there may be one or more computing instances. For example, the receiving module 810 may include code that is run on a plurality of hosts, virtual machines, or containers. It should be noted that the plurality of hosts, virtual machines, or containers configured to run the code may be distributed in a same region, or may be distributed in different regions. Further, the plurality of hosts, virtual machines, or containers configured to run the code may be distributed in a same availability zone AZ, or may be distributed in different AZs. Each AZ includes one data center or a plurality of data centers that are geographically close to each other. Usually, one region may include a plurality of AZs.

Similarly, the plurality of hosts, virtual machines, or containers configured to run the code may be distributed in a same VPC, or may be distributed in a plurality of VPCs. Usually, one VPC is disposed in one region. For cross-region communication between two VPCs in a same region and between VPCs in different regions, a communication gateway needs to be disposed in each of the VPCs, and interconnection between the VPCs is implemented through the communication gateway.

A module is used as an example of a hardware functional unit. The receiving module 810 may include at least one computing device, for example, a server. Alternatively, the receiving module 810 may be a device implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field-programmable gate array (field-programmable gate array, FPGA), generic array logic (generic array logic, GAL), or any combination thereof.

A plurality of computing devices included in the receiving module 810 may be distributed in a same region, or may be distributed in different regions. The plurality of computing devices included in the receiving module 810 may be distributed in a same AZ, or may be distributed in different AZs. Similarly, the plurality of computing devices included in the receiving module 810 may be distributed in a same VPC, or may be distributed in a plurality of VPCs. The plurality of computing devices may be any combination of computing devices such as a server, an ASIC, a PLD, a CPLD, an FPGA, and GAL.

It should be noted that, in another embodiment, the receiving module 810 may be configured to perform any step in the method shown in FIG. 7, and the identification module 820 may be configured to perform any step in the method shown in FIG. 7, and the management module 830 may be configured to perform any step in the method shown in FIG. 7. The receiving module 810, the identification module 820, and the management module 830 are responsible for implementing steps that may be designated as required. The receiving module 810, the identification module 820, and the management module 830 implement different steps in the method shown in FIG. 7, to implement all functions of the traffic management apparatus 800.

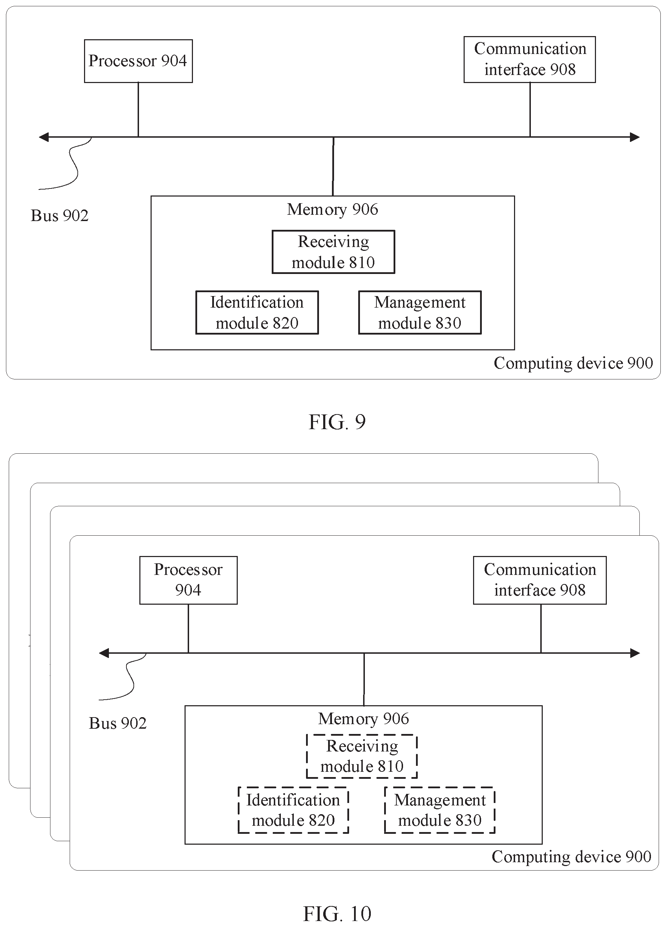

This application further provides a computing device 900. As shown in FIG. 9, the computing device 900 includes a bus 902, a processor 904, a memory 906, and a communication interface 908. The processor 904, the memory 906, and the communication interface 908 communicate with each other by using the bus 902. The computing device 900 may be a server or a terminal device. It should be understood that a quantity of processors and a quantity of memories in the computing device 900 are not limited in this application.

The bus 902 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 9. However, it does not indicate that there is only one bus or only one type of bus. The bus 902 may include a channel through which various components (for example, the memory 906, the processor 904, and the communication interface 908) of the computing device 900 transmit information to each other.

The processor 904 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 906 may include a volatile memory (volatile memory), such as a random access memory (random access memory, RAM). The memory 906 may further include a non-volatile memory (non-volatile memory), such as a read-only memory (read-only memory, ROM), a flash memory, a hard disk drive (hard disk drive, HDD), or a solid state drive (solid state drive, SSD).

The memory 906 stores executable program code. The processor 904 executes the executable program code to separately implement functions of the receiving module 810, the identification module 820, and the management module 830, thereby implementing the method shown in FIG. 7. In other words, the memory 906 stores instructions used to perform the method shown in FIG. 7.

The communication interface 908 uses a transceiver module, for example, but not limited to, a network interface card or a transceiver, to implement communication between the computing device 900 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 10, the computing device cluster includes at least one computing device 900. A memory 906 in one or more computing devices 900 in the computing device cluster may store same instructions for performing the method shown in FIG. 7.

In some possible implementations, alternatively, a memory 906 in each of one or more computing devices 900 in the computing device cluster may store a part of instructions for performing the method shown in FIG. 7. In other words, a combination of the one or more computing devices 900 may jointly execute the instructions used to perform the method shown in FIG. 7.

It should be noted that memories 906 in different computing devices 900 in the computing device cluster may store different instructions respectively used to perform some functions of the traffic management apparatus 800. To be specific, instructions stored in the memories 906 in different computing devices 900 may implement functions of one or more of the receiving module 810, the identification module 820, and the management module 830.

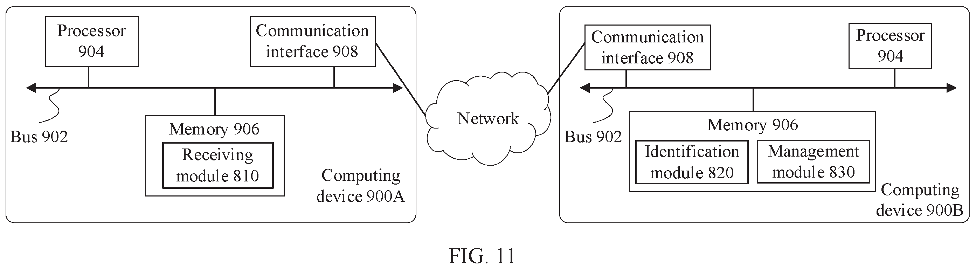

In some possible implementations, the one or more computing devices in the computing device cluster may be connected through a network. The network may be a wide area network, a local area network, or the like. FIG. 11 shows a possible implementation. As shown in FIG. 11, two computing devices 900A and 900B are connected through a network. Specifically, each computing device is connected to the network through a communication interface of the computing device. In this possible implementation, a memory 906 in the computing device 900A stores instructions for performing functions of the receiving module 810. In addition, a memory 906 in the computing device 900B stores instructions for performing functions of the identification module 820 and the management module 830.

It should be understood that functions of the computing device 900A shown in FIG. 11 may also be completed by a plurality of computing devices 900. Similarly, functions of the computing device 900B may also be completed by a plurality of computing devices 900.

An embodiment of this application further provides another computing device cluster. For a connection relationship between computing devices in the computing device cluster, refer to the connection manner in the computing device cluster in FIG. 10 and FIG. 11 similarly. A difference is that a memory 906 in one or more computing devices 900 in the computing device cluster may store same instructions for performing the method shown in FIG. 7.

In some possible implementations, alternatively, a memory 906 in each of one or more computing devices 900 in the computing device cluster may store a part of instructions for performing the method shown in FIG. 7. In other words, a combination of the one or more computing devices 900 may jointly execute the instructions used to perform the method shown in FIG. 7.

An embodiment of this application further provides a computer program product including instructions. The computer program product may be a software or program product that includes instructions and that can be run on a computing device or stored in any usable medium. When the computer program product is run on at least one computing device, the at least one computing device is enabled to perform the method shown in FIG. 7.

An embodiment of this application further provides a computer-readable storage medium. The computer-readable storage medium may be any usable medium accessible to a computing device, or a host migration device such as a data center, including one or more usable media. The usable medium may be a magnetic medium (for example, a floppy disk, a hard disk, or a magnetic tape), an optical medium (for example, a DVD), a semiconductor medium (for example, a solid state drive), or the like. The computer-readable storage medium includes instructions. The instructions instruct the computing device to perform the method shown in FIG. 7.

Finally, it should be noted that the foregoing embodiments are merely intended for describing the technical solutions of this application, but not for limiting this application. Although this application is described in detail with reference to the foregoing embodiments, persons of ordinary skills in the art should understand that they may still make modifications to the technical solutions described in the foregoing embodiments or make equivalent replacements to some technical features thereof, without departing from the protection scope of the technical solutions of embodiments of this application.

## Claims

1. A traffic management method, wherein the method is applied to a service mesh system, the service mesh system comprises a first service node and a proxy cluster, the first service node hosts a first transport-layer L4 proxy and a first service container group of a first tenant, the proxy cluster hosts a first application-layer L7 proxy, the first L7 proxy comprises configuration information of a plurality of services, different services in the plurality of services belong to a same tenant or different tenants, and the configuration information of the services is used by the first L7 proxy to perform traffic management on data packets of the services; and the method comprises:
receiving, by the first L4 proxy, a first data packet sent by the first service container group;
sending, by the first L4 proxy, an identifier of the first tenant and the first data packet to the first L7 proxy;
identifying, by the first L7 proxy, configuration information of a first service from the configuration information of the plurality of services based on the identifier of the first tenant, wherein the first service belongs to the first tenant; and
performing, by the first L7 proxy, traffic management on the first data packet based on the configuration information of the first service.

2. The method according to claim 1, wherein the first service node further hosts a second service container group of a second tenant; and the method comprises:
receiving, by the first L4 proxy, a second data packet sent by the second service container group;
sending, by the first L4 proxy, an identifier of the second tenant and the second data packet to the first L7 proxy;
identifying, by the first L7 proxy, configuration information of a second service from the configuration information of the plurality of services based on the identifier of the second tenant, wherein the second service belongs to the second tenant; and
performing, by the first L7 proxy, traffic management on the second data packet based on the configuration information of the second service.

3. The method according to claim 1 or 2, wherein the first service comprises a service corresponding to the first data packet and another service; and
performing, by the first L7 proxy, traffic management on the first data packet based on the configuration information of the first service comprises:
identifying, by the first L7 proxy based on an identifier of the service corresponding to the first data packet, configuration information of the service corresponding to the first data packet from the configuration information of the first service; and
performing, by the first L7 proxy, traffic management on the first data packet based on the configuration information of the service corresponding to the first data packet.

4. The method according to claim 3, wherein the proxy cluster hosts a plurality of L7 proxies; and sending, by the first L4 proxy, the identifier of the first tenant and the first data packet to the first L7 proxy comprises:
identifying, by the first L4 proxy based on the identifier of the first tenant, L7 proxies comprising configuration information of services of the first tenant from the plurality of L7 proxies; and
identifying, by the first L4 proxy based on the identifier of the service corresponding to the first data packet, an L7 proxy comprising the configuration information of the service corresponding to the first data packet from the L7 proxies comprising the configuration information of the services of the first tenant, to obtain the first L7 proxy.

5. The method according to any one of claims 1 to 4, wherein the proxy cluster further hosts a second L7 proxy, and the second L7 proxy comprises configuration information of at least one service; and
sending, by the first L4 proxy, the identifier of the first tenant and the first data packet to the first L7 proxy comprises:
when a quantity of services belonging to the first tenant in the plurality of services is greater than a quantity of services belonging to the first tenant in the at least one service, sending, by the first L4 proxy, the identifier of the first tenant and the first data packet to the first L7 proxy.

6. The method according to any one of claims 1 to 4, wherein the proxy cluster further hosts a second L7 proxy, and the second L7 proxy also comprises the configuration information of the first service; and
sending, by the first L4 proxy, the identifier of the first tenant and the first data packet to the first L7 proxy comprises:
when a load of the second L7 proxy is higher than that of the first L7 proxy, sending, by the first L4 proxy, the identifier of the first tenant and the first data packet to the first L7 proxy.

7. The method according to any one of claims 1 to 6, wherein the service mesh system further comprises a console connected to the proxy cluster; and
the method further comprises: sending, by the console, configuration information of two or more services to a same L7 proxy in the proxy cluster, wherein the two or more services belong to a same tenant, or an output of one of the two or more services is an input of another service.

8. The method according to claim 7, wherein the proxy cluster hosts the plurality of L7 proxies, wherein in the plurality of L7 proxies, the same L7 proxy comprises configuration information of the fewest services, or the same L7 proxy comprises configuration information of the fewest tenants.

9. The method according to any one of claims 1 to 8, wherein the service mesh system further comprises a second service node, and the second service node hosts a second L4 proxy and a third service container group;
performing, by the first L7 proxy, traffic management on the first data packet based on the configuration information of the first service comprises:
selecting, by the first L7 proxy, the third service container group as a target container group of the first data packet; and
sending, by the first L7 proxy, the first data packet and the identifier of the first tenant to the second L4 proxy; and
the method further comprises:
determining, by the second L4 proxy based on the identifier of the first tenant, that the first tenant and a tenant to which the third service container group belongs are a same tenant; and
sending, by the second L4 proxy, the first data packet to the third service container group.

10. A service mesh system, wherein the service mesh system comprises a first service node and a proxy cluster, the first service node hosts a first L4 proxy and a first service container group of a first tenant, the proxy cluster hosts a first L7 proxy, the first L7 proxy comprises configuration information of a plurality of services, different services in the plurality of services belong to a same tenant or different tenants, and the configuration information of the services is used by the first L7 proxy to perform traffic management on data packets of the services, wherein
the first L4 proxy is configured to receive a first data packet sent by the first service container group;
the first L4 proxy is configured to send an identifier of the first tenant and the first data packet to the first L7 proxy;
the first L7 proxy is configured to identify configuration information of a first service from the configuration information of the plurality of services based on the identifier of the first tenant, wherein the first service belongs to the first tenant; and
the first L7 proxy is configured to perform traffic management on the first data packet based on the configuration information of the first service.

11. The service mesh system according to claim 10, wherein the first service node further hosts a second service container group of a second tenant;
the first L4 proxy is further configured to receive a second data packet sent by the second service container group;
the first L4 proxy is further configured to send an identifier of the second tenant and the second data packet to the first L7 proxy;
the first L7 proxy is further configured to identify configuration information of a second service from the configuration information of the plurality of services based on the identifier of the second tenant, wherein the second service belongs to the second tenant; and
the first L7 proxy is further configured to perform traffic management on the second data packet based on the configuration information of the second service.

12. The service mesh system according to claim 10 or 11, wherein the first service comprises a service corresponding to the first data packet and another service; and
the first L7 proxy is configured to:
identify, based on an identifier of the service corresponding to the first data packet, configuration information of the service corresponding to the first data packet from the configuration information of the first service; and
perform traffic management on the first data packet based on the configuration information of the service corresponding to the first data packet.

13. The service mesh system according to any one of claims 10 to 12, wherein the proxy cluster further hosts a second L7 proxy, and the second L7 proxy comprises configuration information of at least one service; and
the first L4 proxy is configured to send the identifier of the first tenant and the first data packet to the first L7 proxy when a quantity of services belonging to the first tenant in the plurality of services is greater than a quantity of services belonging to the first tenant in the at least one service.

14. The service mesh system according to any one of claims 10 to 12, wherein the proxy cluster further hosts a second L7 proxy, and the second L7 proxy also comprises the configuration information of the first service; and
the first L4 proxy is configured to send the identifier of the first tenant and the first data packet to the first L7 proxy when a load of the second L7 proxy is higher than that of the first L7 proxy.

15. The service mesh system according to any one of claims 10 to 14, wherein the service mesh system further comprises a console connected to the proxy cluster; and
the console is configured to send configuration information of two or more services to a same L7 proxy in the proxy cluster, wherein the two or more services belong to a same tenant, or an output of one of the two or more services is an input of another service.

16. The service mesh system according to any one of claims 10 to 15, wherein the service mesh system further comprises a second service node, and the second service node hosts a second L4 proxy and a third service container group;
the first L7 proxy is configured to:
select the third service container group as a target container group of the first data packet; and
send the first data packet and the identifier of the first tenant to the second L4 proxy; and
the second L4 proxy is configured to:
determine, based on the identifier of the first tenant, that the first tenant and a tenant to which the third service container group belongs are a same tenant; and
send the first data packet to the third service container group.

17. A traffic management method, wherein the method is applied to a first L7 proxy in a service mesh system, the service mesh system comprises a first service node and a proxy cluster, the first service node hosts a first L4 proxy and a first service container group of a first tenant, the proxy cluster hosts the first L7 proxy, the first L7 proxy comprises configuration information of a plurality of services, different services in the plurality of services belong to a same tenant or different tenants, and the configuration information of the services is used by the first L7 proxy to perform traffic management on data packets of the services; and the method comprises:
receiving, by the first L7 proxy, an identifier of the first tenant and a first data packet that are sent by the first L4 proxy, wherein the first data packet is received by the first L4 proxy from the first service container group; and
identifying, by the first L7 proxy, configuration information of a first service from the configuration information of the plurality of services based on the identifier of the first tenant, wherein the first service belongs to the first tenant; and
performing, by the first L7 proxy, traffic management on the first data packet based on the configuration information of the first service.

18. The method according to claim 17, wherein the first service node further hosts a second service container group of a second tenant; and the method comprises:
receiving, by the first L7 proxy, an identifier of the second tenant and a second data packet that are sent by the first L4 proxy, wherein the second data packet is received by the first L4 proxy from the second service container group;
sending, by the first L4 proxy, the identifier of the second tenant and the second data packet to the first L7 proxy;
identifying, by the first L7 proxy, configuration information of a second service from the configuration information of the plurality of services based on the identifier of the second tenant, wherein the second service belongs to the second tenant; and
performing, by the first L7 proxy, traffic management on the second data packet based on the configuration information of the second service.

19. The method according to claim 17 or 18, wherein the first service comprises a service corresponding to the first data packet and another service; and
performing, by the first L7 proxy, traffic management on the first data packet based on the configuration information of the first service comprises:
identifying, by the first L7 proxy based on an identifier of the service corresponding to the first data packet, configuration information of the service corresponding to the first data packet from the configuration information of the first service; and
performing, by the first L7 proxy, traffic management on the first data packet based on the configuration information of the service corresponding to the first data packet.

20. The method according to any one of claims 17 to 19, wherein the proxy cluster further hosts a second L7 proxy, and the second L7 proxy comprises configuration information of at least one service; and
receiving, by the first L7 proxy, the identifier of the first tenant and the first data packet that are sent by the first L4 proxy comprises:
when a quantity of services belonging to the first tenant in the plurality of services is greater than a quantity of services belonging to the first tenant in the at least one service, receiving, by the first L7 proxy, the identifier of the first tenant and the first data packet that are sent by the first L4 proxy.

21. The method according to any one of claims 17 to 20, wherein the proxy cluster further hosts a second L7 proxy, and the second L7 proxy also comprises the configuration information of the first service; and
receiving, by the first L7 proxy, the identifier of the first tenant and the first data packet that are sent by the first L4 proxy comprises:
when a load of the second L7 proxy is higher than that of the first L7 proxy, receiving, by the first L7 proxy, the identifier of the first tenant and the first data packet that are sent by the first L4 proxy.

22. The method according to any one of claims 17 to 21, wherein the service mesh system further comprises a console connected to the proxy cluster; and
the method further comprises: receiving and recording, by the first L7 proxy, configuration information of two or more services from the console, wherein the two or more services belong to a same tenant, or an output of one of the two or more services is an input of another service.

23. The method according to any one of claims 17 to 22, wherein the service mesh system further comprises a second service node, and the second service node hosts a second L4 proxy and a third service container group;
performing, by the first L7 proxy, traffic management on the first data packet based on the configuration information of the first service comprises:
selecting, by the first L7 proxy, the third service container group as a target container group of the first data packet; and
sending, by the first L7 proxy, the first data packet and the identifier of the first tenant to the second L4 proxy; and
the second L4 proxy is configured to:
determine, based on the identifier of the first tenant, that the first tenant and a tenant to which the third service container group belongs are a same tenant; and
send the first data packet to the third service container group.

24. A traffic management apparatus, wherein the apparatus is configured in a first L7 proxy in a service mesh system, the service mesh system comprises a first service node and a proxy cluster, the first service node hosts a first L4 proxy and a first service container group of a first tenant, the proxy cluster hosts the first L7 proxy, the first L7 proxy comprises configuration information of a plurality of services, different services in the plurality of services belong to a same tenant or different tenants, and the configuration information of the services is used by the first L7 proxy to perform traffic management on data packets of the services; and the apparatus comprises:
a receiving module, configured to receive an identifier of the first tenant and a first data packet that are sent by the first L4 proxy, wherein the first data packet is received by the first L4 proxy from the first service container group;
an identification module, configured to identify configuration information of a first service from the configuration information of the plurality of services based on the identifier of the first tenant, wherein the first service belongs to the first tenant; and
a management module, configured to perform traffic management on the first data packet based on the configuration information of the first service.

25. The apparatus according to claim 24, wherein the first service node further hosts a second service container group of a second tenant;
the receiving module is further configured to receive an identifier of the second tenant and a second data packet that are sent by the first L4 proxy, wherein the second data packet is received by the first L4 proxy from the second service container group;
the identification module is further configured to identify configuration information of a second service from the configuration information of the plurality of services based on the identifier of the second tenant, wherein the second service belongs to the second tenant; and
the management module is further configured to perform traffic management on the second data packet based on the configuration information of the second service.

26. The apparatus according to claim 24 or 25, wherein the first service comprises a service corresponding to the first data packet and another service; and
the management module is configured to:
identify, based on an identifier of the service corresponding to the first data packet, configuration information of the service corresponding to the first data packet from the configuration information of the first service; and
perform traffic management on the first data packet based on the configuration information of the service corresponding to the first data packet.

27. The apparatus according to any one of claims 24 to 26, wherein the proxy cluster further hosts a second L7 proxy, and the second L7 proxy comprises configuration information of at least one service; and
the receiving module is configured to receive the identifier of the first tenant and the first data packet that are sent by the first L4 proxy when a quantity of services belonging to the first tenant in the plurality of services is greater than a quantity of services belonging to the first tenant in the at least one service.

28. The apparatus according to any one of claims 24 to 26, wherein the proxy cluster further hosts a second L7 proxy, and the second L7 proxy also comprises the configuration information of the first service; and
the receiving module is configured to receive the identifier of the first tenant and the first data packet that are sent by the first L4 proxy when a load of the second L7 proxy is higher than that of the first L7 proxy.

29. The apparatus according to any one of claims 24 to 28, wherein the service mesh system further comprises a console connected to the proxy cluster; and
the receiving module is configured to receive and record configuration information of two or more services from the console, wherein the two or more services belong to a same tenant, or an output of one of the two or more services is an input of another service.

30. The apparatus according to any one of claims 24 to 29, wherein the service mesh system further comprises a second service node, and the second service node hosts a second L4 proxy and a third service container group;
the management module is configured to:
select, by the first L7 proxy, the third service container group as a target container group of the first data packet; and
send, by the first L7 proxy, the first data packet and the identifier of the first tenant to the second L4 proxy; and
the second L4 proxy is configured to:
determine, based on the identifier of the first tenant, that the first tenant and a tenant to which the third service container group belongs are a same tenant; and
send the first data packet to the third service container group.

31. A computing device cluster, comprising at least one computing device, wherein each computing device comprises a processor and a memory, wherein
the processor of the at least one computing device is configured to execute instructions stored in the memory of the at least one computing device, so that the computing device cluster performs the method according to any one of claims 17 to 23.

32. A computer-readable storage medium, comprising computer program instructions, wherein when the computer program instructions are executed by a computing device cluster, the computing device cluster performs the method according to any one of claims 17 to 23.

33. A computer program product comprising instructions, wherein when the instructions are run by a computing device cluster, the computer device cluster is enabled to perform the method according to any one of claims 17 to 23.
